# EUROPEAN PATENT SPECIFICATION

(11) **EP 4 641 461 B1**
(45) Date of publication and mention of the grant of the patent: **14.10.2026**
(21) Application number: 23906310.0
(22) Date of filing: 23.05.2023
(51) Int. Cl.: G06Q 10/20, B60C 19/00, B60S 5/00, G06Q 50/26, G06Q 50/40

(54) **TIRE MANAGEMENT SYSTEM, AND TIRE MANAGEMENT METHOD**
REIFENVERWALTUNGSSYSTEM UND REIFENVERWALTUNGSVERFAHREN
SYSTÈME DE GESTION DE PNEUS ET PROCÉDÉ DE GESTION DE PNEUS

(30) Priority: 19.12.2022 JP 2022202110
(43) Date of publication of application: 29.10.2025
(73) Proprietor: SUMITOMO RUBBER INDUSTRIES, LTD., Kobe-shi, Hyogo 651-0072 (JP)
(72) Inventor: HOSOYA Ryota, Kobe-shi, Hyogo 651-0072 (JP)
(74) Representative: Forresters IP LLP
(86) International application number: PCT/JP2023/019204
(87) International publication number: WO 2024/134924

(56) References cited:
- JP-A- 2010 055 542
- JP-A- 2016 206 825
- JP-A- 2018 020 752
- JP-A- 2019 200 463
- JP-A- 2022 037 754

## Description

### TECHNICAL FIELD

The present disclosure relates to a tire management system and a tire management method.

### BACKGROUND ART

A tire management system capable of supporting tire inspection work is known JP 2005-138738. For example, in the tire management system, when a vehicle for which the tire inspection work is to be performed is specified, a plurality of pieces of tire information corresponding to a plurality of the tires mounted on the vehicle are displayed on a terminal device of a worker who performs the tire inspection work. Accordingly, for example, on the basis of the piece of the tire information corresponding to the tire to be inspected, the worker can determine whether or not and how to perform inspection work on this tire.

A tire management system that manages information about tires mounted on a plurality of pre-registered vehicles, and information that is carried by a worker and measured at the time of tire inspection of the vehicle is known from JP2022037754.

### SUMMARY OF THE INVENTION

### PROBLEMS TO BE SOLVED BY THE INVENTION

Meanwhile, after the worker inspects the tire of one of two vehicles parked side by side, the worker may turn their body while remaining in the same place and may inspect the tire of the other vehicle. Accordingly, the efficiency of the work is significantly improved. Here, in the above-described tire management system, only one vehicle for which the tire inspection work is to be performed can be specified. Therefore, in the above-described tire management system, when the worker performs the tire inspection work between two vehicles parked side by side, each time the inspection work on the tire of one of the vehicles is completed, the worker has to perform an operation for displaying a plurality of pieces of the tire information corresponding to the other vehicle, on the terminal device, which takes time and effort for the worker.

An object of the present disclosure is to provide a tire management system and a tire management method that can reduce the time and effort taken by a worker who performs tire inspection work.

### SOLUTION TO THE PROBLEMS

A tire management system according to one aspect of the present disclosure includes a first specification processing unit and a display processing unit. The first specification processing unit is configured to specify a first vehicle and a second vehicle. The display processing unit is configured to display a tire information placement screen in which a part or all of a plurality of pieces of tire information corresponding to a plurality of tires mounted on the first vehicle are placed on a side in a predetermined first direction and a part or all of a plurality of pieces of the tire information corresponding to a plurality of the tires mounted on the second vehicle are placed on a side in a second direction opposite to the first direction.

With this tire management system, it is possible to collectively display a plurality of pieces of the tire information corresponding to a plurality of vehicles parked so as to be aligned with each other, for each vehicle. Therefore, when, between the two vehicles parked so as to be aligned with each other, the tire of one vehicle and the tire of the other vehicle are alternately inspected, it is possible to omit the time and effort for performing an operation for displaying the tire information of the other vehicle by a worker who performs the inspection work, each time the inspection work on the tire of the one vehicle is completed.
The present invention is defined by the claims.

### ADVANTAGEOUS EFFECTS OF THE INVENTION

According to the present disclosure, it is possible to reduce the time and effort taken by a worker who performs tire inspection work.

### BRIEF DESCRIPTION OF THE DRAWINGS

[FIG. 1] FIG. 1 is a diagram showing the configuration of a tire management system according to a first embodiment of the present disclosure.
[FIG. 2] FIG. 2 is a diagram showing the configuration of a mobile terminal of the tire management system according to the first embodiment of the present disclosure.
[FIG. 3] FIG. 3 is a flowchart showing an example of a first inspection result registration process executed by the tire management system according to the first embodiment of the present disclosure.
[FIG. 4A] FIG. 4A is a diagram showing an example of a vehicle search screen displayed in the tire management system according to the first embodiment of the present disclosure.
[FIG. 4B] FIG. 4B is a diagram showing another example of the vehicle search screen displayed in the tire management system according to the first embodiment of the present disclosure.
[FIG. 5A] FIG. 5A is a diagram showing an example of a search result display screen displayed in the tire management system according to the first embodiment of the present disclosure.
[FIG. 5B] FIG. 5B is a diagram showing another example of the search result display screen displayed in the tire management system according to the first embodiment of the present disclosure.
[FIG. 6A] FIG. 6A is a diagram showing an example of a tire information placement screen displayed in the tire management system according to the first embodiment of the present disclosure.
[FIG. 6B] FIG. 6B is a diagram showing another example of the tire information placement screen displayed in the tire management system according to the first embodiment of the present disclosure.
[FIG. 6C] FIG. 6C is a diagram showing still another example of the tire information placement screen displayed in the tire management system according to the first embodiment of the present disclosure.
[FIG. 7] FIG. 7 is a diagram showing an example of a first direction side screen displayed in the tire management system according to the first embodiment of the present disclosure.
[FIG. 8] FIG. 8 is a diagram showing an example of a second direction side screen displayed in the tire management system according to the first embodiment of the present disclosure.
[FIG. 9] FIG. 9 is a diagram showing the configuration of a tire management system according to a second embodiment of the present disclosure.
[FIG. 10] FIG. 10 is a diagram showing the configuration of a mobile terminal of the tire management system according to the second embodiment of the present disclosure.
[FIG. 11] FIG. 11 is a flowchart showing an example of a second inspection result registration process executed by the tire management system according to the second embodiment of the present disclosure.
[FIG. 12] FIG. 12 is a diagram showing an example of a capture image display screen displayed in the tire management system according to the second embodiment of the present disclosure.
[FIG. 13] FIG. 13 is a diagram showing an example of a tire information placement screen displayed in the tire management system according to the second embodiment of the present disclosure.
[FIG. 14] FIG. 14 is a diagram showing the configuration of a tire management system according to a third embodiment of the present disclosure.
[FIG. 15] FIG. 15 is a diagram showing the configuration of a mobile terminal of the tire management system according to the third embodiment of the present disclosure.
[FIG. 16] FIG. 16 is a flowchart showing an example of a third inspection result registration process executed by the tire management system according to the third embodiment of the present disclosure.
[FIG. 17] FIG. 17 is a diagram showing an example of a tire information placement screen displayed in the tire management system according to the third embodiment of the present disclosure.

### DESCRIPTION OF EMBODIMENTS

Hereinafter, embodiments of the present disclosure will be described with reference to the accompanying drawings. The following embodiments are each an example in which the present disclosure is embodied, and do not limit the technical scope of the present disclosure.

### [First Embodiment]

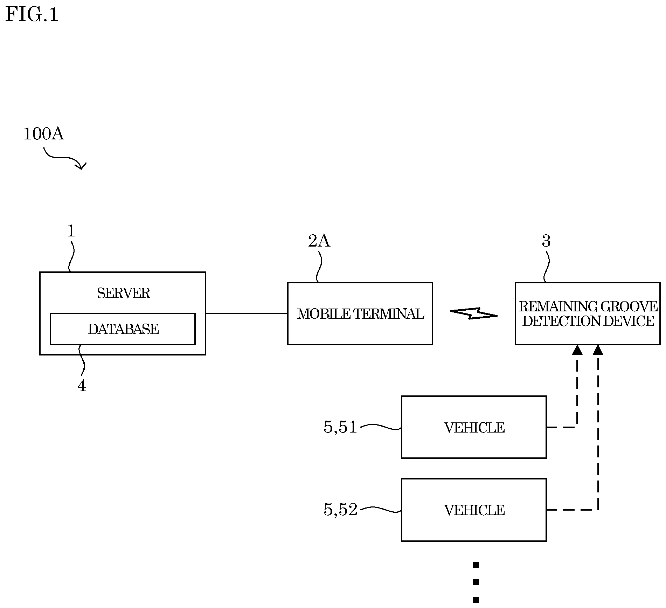

First, the configuration of a tire management system 100A according to a first embodiment of the present disclosure will be described with reference to FIG. 1.

The tire management system 100A registers inspection result data acquired by inspection of a tire of a vehicle 5 (see FIG. 1), in a database 4 (see FIG. 1) of a server 1 in association with the tire.

Specifically, the vehicle 5 is a truck.

Also, the tire is a pneumatic tire.

In addition, the inspection result data includes remaining groove information and determination result information. The remaining groove information is information indicating an inspection result of a remaining groove of the tire. The determination result information is information indicating a determination result as to whether or not the remaining groove of the tire indicated by the remaining groove information is equal to or greater than a predetermined reference value. The reference value is a value used for determining whether or not the tire needs to be replaced. That is, the determination result information is information indicating a determination result as to whether or not the tire needs to be replaced.

The vehicle 5 is not limited to a truck and may be any movable body that travels using the tire. For example, the vehicle 5 may be a passenger car, a bus, a motorcycle, a three-wheeled passenger car, a motorized bicycle, or a bicycle. The vehicle 5 may also be a trailer or a load vehicle such as a hand truck.

In addition, the tire is not limited to a pneumatic tire and may be a non-pneumatic tire such as a so-called solid tire. The tire may also be a resin tire in which a thermoplastic elastomer is used.

In addition, the inspection result data may include air pressure information indicating an inspection result of the air pressure of the tire. The inspection result data may also include scratch information indicating an inspection result of a state of scratches on the outer surface of the tire. The inspection result data may also include wear information indicating an inspection result of a wear state on a tread portion of the tire. The inspection result data may also include a photographic image of the tire.

As shown in FIG. 1, the tire management system 100A includes the server 1, a mobile terminal 2A, and a remaining groove detection device 3.

In the tire management system 100A, the server 1 and the mobile terminal 2A are connected to each other by a communication network, such as the Internet or a local area network (LAN), so as to be able to communicate with each other.

In addition, in the tire management system 100A, the remaining groove detection device 3 is capable of executing wireless communication with the mobile terminal 2A in accordance with the Bluetooth communication standard. Specifically, pairing, which is an authentication procedure for a communication partner in Bluetooth communication, is executed in advance between the remaining groove detection device 3 and the mobile terminal 2A. For example, the remaining groove detection device 3 executes wireless communication by Bluetooth with the mobile terminal 2A that exists within a range of about 10 m, at a radio wave intensity (2.5 mW) referred to as Class 2. The remaining groove detection device 3 may execute wireless communication with the mobile terminal 2A in accordance with a wireless LAN communication standard such as IEEE 802.11ac.

The server 1 is an information processing device that manages the database 4. For example, the database 4 is stored in a storage device provided in the server 1. The server 1 is an example of an information processing device of the present disclosure.

In the database 4, vehicle data regarding the vehicle 5 is registered in advance. For example, the vehicle data is composed of a vehicle ID, registration number information, vehicle name information, vehicle dimension information, axle configuration information, double tire information, spare tire information, business entity information, business office information, door number information, traveling area information, and plate size information.

The vehicle ID is identification information of the vehicle 5 assigned by the server 1. The registration number information is information indicating a vehicle registration number displayed on a license plate of the vehicle 5. The vehicle name information is information indicating the trade name of the vehicle 5. The vehicle dimension information is information indicating the dimensions of the vehicle 5.

The axle configuration information is information indicating the axle configuration of the vehicle 5. For example, the axle configuration includes a first axle configuration composed of a front wheel axle and a rear wheel axle. The axle configuration also includes a second axle configuration composed of a front wheel first axle, a front wheel second axle on the rear side of the front wheel first axle, and a rear wheel axle. The axle configuration also includes a third axle configuration composed of the front wheel axle, a rear wheel first axle, and a rear wheel second axle on the rear side of the rear wheel first axle. The axle configuration also includes a fourth axle configuration composed of the front wheel first axle, the front wheel second axle, the rear wheel first axle, and the rear wheel second axle.

The double tire information is information indicating whether or not the rear wheels of the vehicle 5 are double tires. The spare tire information is information indicating the presence or absence of a spare tire in the vehicle 5. The business entity information is information indicating the name of a transportation business entity that performs transportation business using the vehicle 5 (truck). The business office information is information indicating the name of a business office where the vehicle 5 is parked, among the business offices of the transportation business entity. The door number information is information displayed on the outer surface of each door of the vehicle 5 and indicating a number (door number) which is used by the transportation business entity to identify the vehicle 5. The traveling area information is information indicating a traveling area of the vehicle 5. The plate size information is information indicating the size of the license plate of the vehicle 5.

When the information other than the vehicle ID among the plurality of pieces of information constituting the vehicle data is inputted by a user of the tire management system 100A, the server 1 generates the vehicle ID corresponding to the inputted information. Then, the server 1 registers the generated vehicle ID and the information inputted by the user, in the database 4 as new vehicle data.

In addition, in the database 4, tire data regarding the tire is registered in advance. For example, the tire data is composed of a tire ID, the vehicle ID, tire name information, tire dimension information, tread pattern information, use information, retread information, and mounting position information.

The tire ID is identification information of the tire assigned by the server 1. The tire name information is information indicating the trade name of the tire. The tire dimension information is information indicating the dimensions of the tire. The tread pattern information is information used for identifying the tread pattern of the tire. The use information is information indicating whether the tire is a summer tire or a winter tire. The retread information is information indicating whether the tire is a new tire or a retreaded tire.

The mounting position information is information indicating which of a plurality of tire mounting positions in the vehicle 5 the tire is mounted at. The plurality of the tire mounting positions in the vehicle 5 are specified by a combination of the axle configuration in the vehicle 5, whether or not the rear wheels are double tires, and the presence or absence of the spare tire.

For example, it is assumed that there is a vehicle 5 in which the axle configuration is the first axle configuration, the rear wheels are double tires, and the spare tire is included. A plurality of the tire mounting positions in the vehicle 5 are (1) a front wheel axle left side position, (2) a front wheel axle right side position, (3) a rear wheel axle left outside position, (4) a rear wheel axle left inside position, (5) a rear wheel axle right inside position, (6) a rear wheel axle right outside position, and (7) a spare tire mounting position.

It is also assumed that there is a vehicle 5 in which the axle configuration is the fourth axle configuration, the rear wheels are double tires, and the spare tire is included. A plurality of the tire mounting positions in the vehicle 5 are (1) a front wheel first axle left side position, (2) a front wheel first axle right side position, (3) a front wheel second axle left side position, (4) a front wheel second axle right side position, (5) a rear wheel first axle left outside position, (6) a rear wheel first axle left inside position, (7) a rear wheel first axle right inside position, (8) a rear wheel first axle right outside position, (9) a rear wheel second axle left outside position, (10) a rear wheel second axle left inside position, (11) a rear wheel second axle right inside position, (12) a rear wheel second axle right outside position, and (13) a spare tire mounting position.

For example, in the tire management system 100A, a number is assigned to each of the tire mounting positions in the vehicle 5. For example, in the tire management system 100A, a sequential number is assigned to each of the tire mounting positions from the mounting position at the left end of the frontmost axle in the vehicle 5 primarily along the right direction, secondarily along the rear direction, to the mounting position at the right end of the rearmost axle in the vehicle 5. In addition, the next number after the number assigned to the mounting position at the right end of the rearmost axle in the vehicle 5 is assigned to the mounting position of the spare tire. In this case, the mounting position information is information indicating any one of the numbers assigned to the respective tire mounting positions in the vehicle 5. The mounting position information may be character information representing the tire mounting position, such as a front wheel axle left side position and a rear wheel second axle right outside position.

When the information other than the tire ID among the plurality of pieces of information constituting the tire data is inputted by the user of the tire management system 100A, the server 1 generates the tire ID corresponding to the inputted information. Then, the server 1 registers the generated tire ID and the information inputted by the user, in the database 4 as new tire data.

In the database 4, tire inspection data including the inspection result data is also registered. For example, the tire inspection data is composed of a tire inspection ID, the tire ID, inspection date information, inspection location information, inspection worker information, vehicle traveling distance information, and the inspection result data. The tire inspection ID is identification information of tire inspection work assigned by the server 1. The inspection date information is information indicating the date when the tire inspection work was performed. The inspection location information is information indication the location where the tire inspection work was performed. The inspection worker information is information indicating the name of the worker who performs the tire inspection work. The vehicle traveling distance information is information indicating the traveling distance of the vehicle 5 at the time of the tire inspection work.

When the information other than the tire inspection ID among the plurality of pieces of information constituting the tire inspection data is inputted by the user of the tire management system 100A, the server 1 generates the tire inspection ID corresponding to the inputted information. Then, the server 1 registers the generated tire inspection ID and the information inputted by the user, in the database 4 as new tire inspection data.

The mobile terminal 2A is a portable terminal device used for acquiring the inspection result data and registering the acquired inspection result data. The mobile terminal 2A is an example of a terminal device of the present disclosure.

Specifically, the mobile terminal 2A is a smartphone carried by the worker.

The mobile terminal 2A is not limited to a smartphone and may be a tablet terminal or a laptop computer. In addition, the mobile terminal 2A is not limited to a general-purpose terminal device and may be a dedicated terminal device specialized for functions of acquiring and registering the inspection result data. The terminal device of the present disclosure does not have to be limited to a portable type.

The remaining groove detection device 3 is a portable detection device capable of detecting the remaining groove of the tire.

For example, the remaining groove detection device 3 includes a needle unit used for detecting the remaining groove of the tire. The needle unit is provided so as to protrude from a body of the remaining groove detection device 3. In addition, the needle unit is provided so as to be able to advance and retract along the direction of protrusion from the body of the remaining groove detection device 3. In addition, the needle unit is biased toward the direction of protrusion from the body of the remaining groove detection device 3 by a biasing unit which is not shown. The remaining groove detection device 3 also includes a measuring unit capable of measuring the amount of retraction of the needle unit to the body side of the remaining groove detection device 3. The remaining groove detection device 3 also includes a display unit used for displaying a detection result of the remaining groove of the tire. The remaining groove detection device 3 also includes an operation unit used for operation by the worker. The remaining groove detection device 3 also includes a communication unit that executes wireless communication by Bluetooth with the mobile terminal 2A. The remaining groove detection device 3 also includes a control unit that centrally controls the own device.

When the remaining groove of the tire is detected, the needle unit is butted against the bottom of the groove of the tire. The remaining groove detection device 3 is also moved toward the tire side until the body thereof comes into contact with the tread surface of the tire. Accordingly, the needle unit retracts toward the body side of the remaining groove detection device 3 by a distance corresponding to the depth of the groove of the tire. The remaining groove detection device 3 measures the amount of retraction of the needle unit using the measuring unit. Then, the remaining groove detection device 3 displays the amount of retraction of the needle unit measured by the measuring unit, on the display unit as the remaining groove of the tire. The remaining groove detection device 3 also transmits data including the detection result of the remaining groove of the tire, to the mobile terminal 2A in response to an operation on the operation unit by the worker.

The remaining groove detection device 3 may detect the remaining groove of the tire using a distance sensor. The remaining groove detection device 3 does not have to have a function of wireless communication by Bluetooth. In this case, the worker may view the detection result of the remaining groove of the tire displayed on the display unit of the remaining groove detection device 3 and manually input the detection result to the mobile terminal 2A. The mobile terminal 2A may also have a function of detecting the remaining groove of the tire. In this case, the tire management system 100A does not have to include the remaining groove detection device 3. Alternatively, the worker may visually check the remaining groove of the tire. In this case, the tire management system 100A does not have to include the remaining groove detection device 3.

### [Configuration of Mobile Terminal 2A]

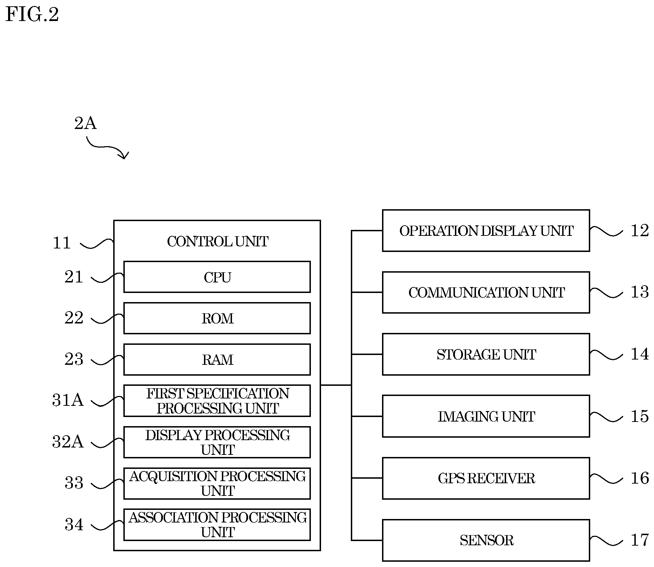

Next, the configuration of the mobile terminal 2A will be described with reference to FIG. 2.

As shown in FIG. 2, the mobile terminal 2A includes a control unit 11, an operation display unit 12, a communication unit 13, a storage unit 14, an imaging unit 15, a GPS receiver 16, and a sensor 17.

The control unit 11 centrally controls the mobile terminal 2A. As shown in FIG. 2, the control unit 11 includes a CPU 21, a ROM 22, and a RAM 23. The CPU 21 is a processor that executes various arithmetic processes. The ROM 22 is a nonvolatile storage device in which information such as a control program for causing the CPU 21 to execute various processes is stored in advance. The RAM 23 is a volatile or nonvolatile storage device that is used as a temporary storage memory (work area) for various processes executed by the CPU 21. The CPU 21 executes various control programs stored in advance in the ROM 22. Accordingly, the CPU 21 centrally controls the mobile terminal 2A.

The operation display unit 12 is a user interface of the mobile terminal 2A. The operation display unit 12 includes a display unit and an operation unit. The display unit displays various kinds of information in response to control instructions from the control unit 11. For example, the display unit is a liquid crystal display. The operation unit inputs various kinds of information to the control unit 11 in response to operations by the user. For example, the operation unit is an operation key or a touch panel.

The communication unit 13 is a communication interface capable of executing wireless data communication with external devices. Specifically, the communication unit 13 executes data communication with the server 1 via the communication network. The communication unit 13 also executes wireless communication by Bluetooth with the remaining groove detection device 3.

The storage unit 14 is a nonvolatile storage device. For example, the storage unit 14 is a flash memory.

In the storage unit 14, a first inspection result registration program for causing the control unit 11 to function as each processing unit shown in FIG. 2 is stored in advance. In the storage unit 14, worker information regarding the worker is also stored in advance. For example, the worker information includes information indicating the name of a company to which the worker belongs, information indicating the name of a business office to which the worker belongs, information indicating the name of the worker, information indicating the number of visits by the worker to the business office of the transportation business entity during a predetermined aggregation period, information indicating the number of vehicles 5 inspected by the worker during the aggregation period, etc.

The imaging unit 15 is a camera capable of capturing a subject and outputting a capture image (image data) including the captured subject.

The GPS receiver 16 is capable of receiving radio waves transmitted from GPS satellites. The mobile terminal 2A is capable of acquiring position information indicating the current position of the own device, on the basis of information included in the radio waves received by the GPS receiver 16.

The sensor 17 includes an acceleration sensor, a gyro sensor, a geomagnetic sensor, etc. The sensor 17 is used for detecting the orientation, movement, and posture changes of the mobile terminal 2A.

Meanwhile, in a conventional tire management system, when a vehicle 5 for which the tire inspection work is to be performed is specified, a plurality of pieces of tire information corresponding to a plurality of the tires mounted on the vehicle 5 are displayed on the terminal device of the worker. Accordingly, for example, on the basis of the tire information corresponding to the tire to be inspected, the worker can determine whether inspection work on the tire is required, a method of the inspection work, etc.

Here, between two vehicles 5 parked side by side, the worker may alternately inspect the tire of one vehicle 5 and the tire of the other vehicle 5. In the conventional tire management system, only one vehicle 5 for which the tire inspection work is to be performed can be designated. Therefore, in the conventional tire management system, when the worker performs the tire inspection work between two vehicles 5 parked side by side, each time the inspection work on the tire of one vehicle 5 is completed, the worker has to perform an operation for displaying a plurality of pieces of the tire information corresponding to the other vehicle 5 on the terminal device, which takes time and effort for the worker.

In contrast, the tire management system 100A according to the embodiment of the present disclosure can reduce the time and effort taken by the worker, as described below.

As shown in FIG. 2, the control unit 11 includes a first specification processing unit 31A, a display processing unit 32A, an acquisition processing unit 33, and an association processing unit 34. The mobile terminal 2A is an example of a tire management system of the present disclosure.

Specifically, the control unit 11 functions as the first specification processing unit 31A, the display processing unit 32A, the acquisition processing unit 33, and the association processing unit 34 by executing the first inspection result registration program stored in the storage unit 14. Some or all of the processing units included in the control unit 11 may be composed of an electronic circuit. The first inspection result registration program may be a program for causing a plurality of processors to function as each processing unit included in the control unit 11.

The first specification processing unit 31A specifies a first vehicle 51 and a second vehicle 52.

Specifically, the first specification processing unit 31A specifies two vehicles 5 designated by an operation on the operation display unit 12 by the user, as the first vehicle 51 and the second vehicle 52.

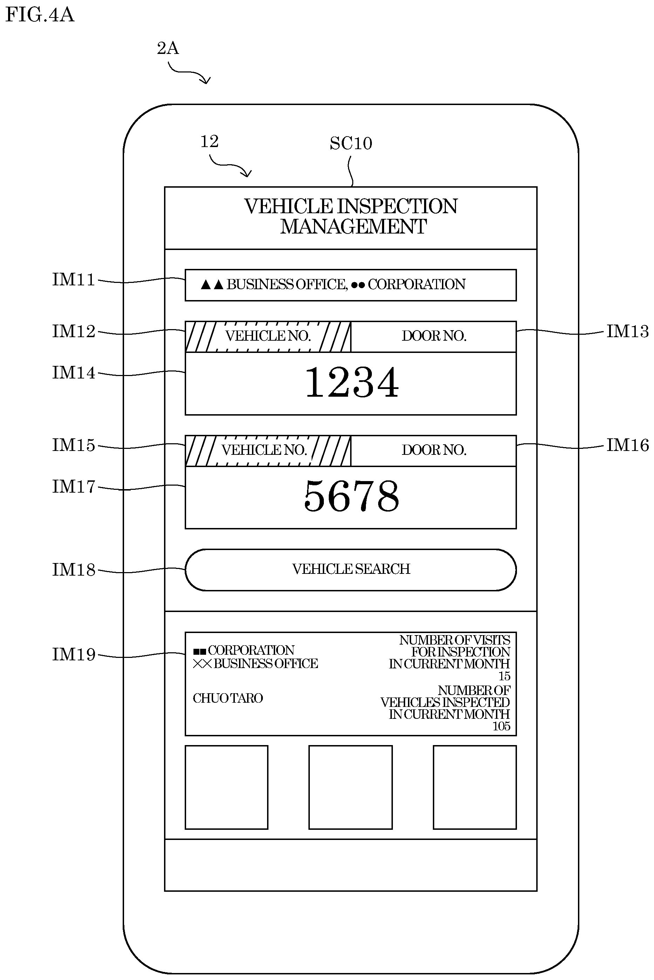

For example, the first specification processing unit 31A displays a vehicle search screen SC10 shown in FIG. 4A, on the operation display unit 12 in response to a predetermined first call operation.

The vehicle search screen SC10 is a screen used for searching for a vehicle 5 to be subjected to be the tire inspection work. As shown in FIG. 4A, the vehicle search screen SC10 includes a business office input field IM11, selection tabs IM12 and IM13, a first information input field IM14, selection tabs IM15 and IM16, a second information input field IM17, an operation key IM18, and a worker information display field IM19.

A combination of the name of the transportation business entity and the name of a business office of the transportation business entity is inputted to the business office input field IM11. The selection tabs IM12 and IM13 are used for designating the type of information to be inputted to the first information input field IM14. Specifically, when the selection tab IM12 is operated, the selection tab IM12 shifts to a selection state which is a state of being selected by the user, and the information to be inputted to the first information input field IM14 is recognized as a vehicle registration number. When the selection tab IM13 is operated, the selection tab IM13 shifts to the selection state, and the information to be inputted to the first information input field IM14 is recognized as a door number. A part or all of the vehicle registration number or the door number of the vehicle 5 designated as the first vehicle 51 is inputted to the first information input field IM14. The selection tabs IM15 and IM16 are used for designating the type of information to be inputted to the second information input field IM17. A part or all of the vehicle registration number or the door number of the vehicle 5 designated as the second vehicle 52 is inputted to the second information input field IM17. The operation key IM18 is used for inputting an instruction to execute a search process based on the information inputted on the vehicle search screen SC10. The worker information is displayed in the worker information display field IM19. In FIG. 4A, the selection tab IM12 and the selection tab IM15 that have shifted to the selection state are each hatched.

When an operation is performed on the operation key IM18, the first specification processing unit 31A executes the search process. Specifically, in the search process, the first specification processing unit 31A requests the server 1 to search for the vehicle data that matches a first search condition. The first search condition is to include both the information inputted to the business office input field IM11 and the vehicle registration number or the door number inputted to the first information input field IM14. In response to the request from the mobile terminal 2A, the server 1 searches the database 4 for the vehicle data that matches the first search condition, and transmits a search result to the mobile terminal 2A. Accordingly, the first specification processing unit 31A can acquire the vehicle data that matches the first search condition. In addition, in the search process, the first specification processing unit 31A requests the server 1 to search for the vehicle data that matches a second search condition. The second search condition is to include both the information inputted to the business office input field IM11 and the vehicle registration number or the door number inputted to the second information input field IM17. In response to the request from the mobile terminal 2A, the server 1 searches the database 4 for the vehicle data that matches the second search condition, and transmits a search result to the mobile terminal 2A. Accordingly, the first specification processing unit 31A can acquire the vehicle data that matches the second search condition.

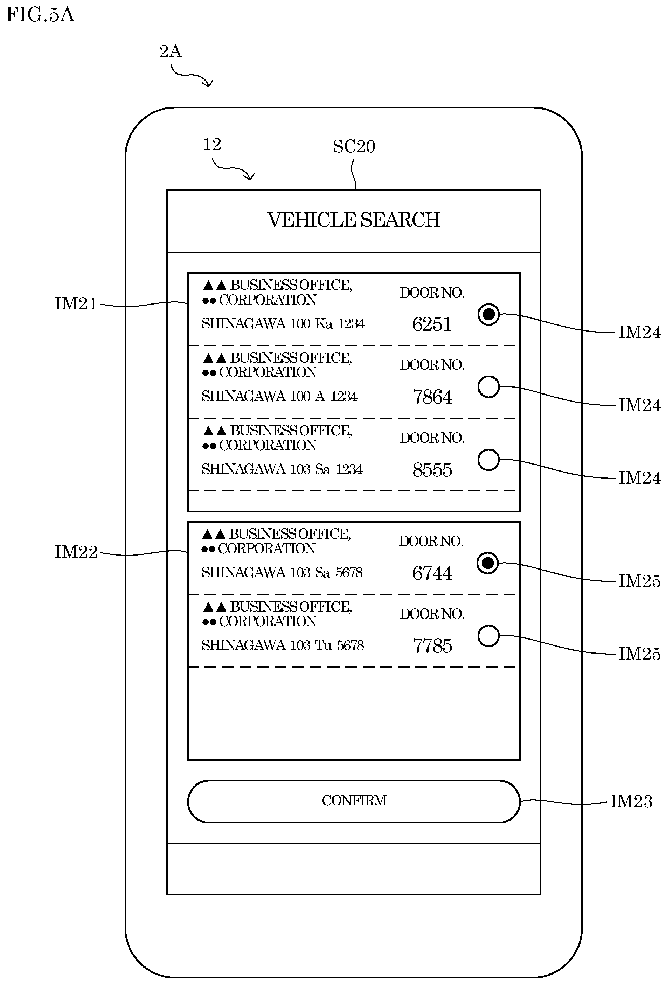

For example, the first specification processing unit 31A displays a search result display screen SC20 shown in FIG. 5A, on the operation display unit 12 after executing the search process.

The search result display screen SC20 is a screen on which the execution result of the search process is displayed. As shown in FIG. 5A, the search result display screen SC20 includes a first search result display field IM21, a second search result display field IM22, an operation key IM23, one or more first radio buttons IM24, and one or more second radio buttons IM25.

In the first search result display field IM21, one or more vehicle data that match the first search condition and are acquired through the search process are displayed. For example, in the first search result display field IM21, the business entity information, the business office information, the registration number information, and the door number information of each of the one or more vehicle data are displayed. When all of the vehicle data cannot be displayed in the first search result display field IM21, the first specification processing unit 31A may display a part of the vehicle data in the first search result display field IM21 and switch the displayed vehicle data in response to a swipe operation along the up-down direction on the first search result display field IM21. The first radio button IM24 is provided for each of the vehicle data to be displayed in the first search result display field IM21. The first radio button IM24 is used for designating the first vehicle 51. In the second search result display field IM22, one or more vehicle data that match the second search condition and are acquired through the search process are displayed. The second radio button IM25 is provided for each of the vehicle data to be displayed in the second search result display field IM22. The second radio button IM25 is used for designating the second vehicle 52. The operation key IM23 is used for inputting an instruction to execute a specification process based on the information inputted on the search result display screen SC20.

When the operation key IM23 is operated, the first specification processing unit 31A executes the specification process. Specifically, the first specification processing unit 31A specifies the vehicle 5 corresponding to the vehicle data designated by the first radio button IM24, as the first vehicle 51. In addition, the first specification processing unit 31A specifies the vehicle 5 corresponding to the vehicle data designated by the second radio button IM25, as the second vehicle 52.

The first specification processing unit 31A may specify a third vehicle in addition to the first vehicle 51 and the second vehicle 52.

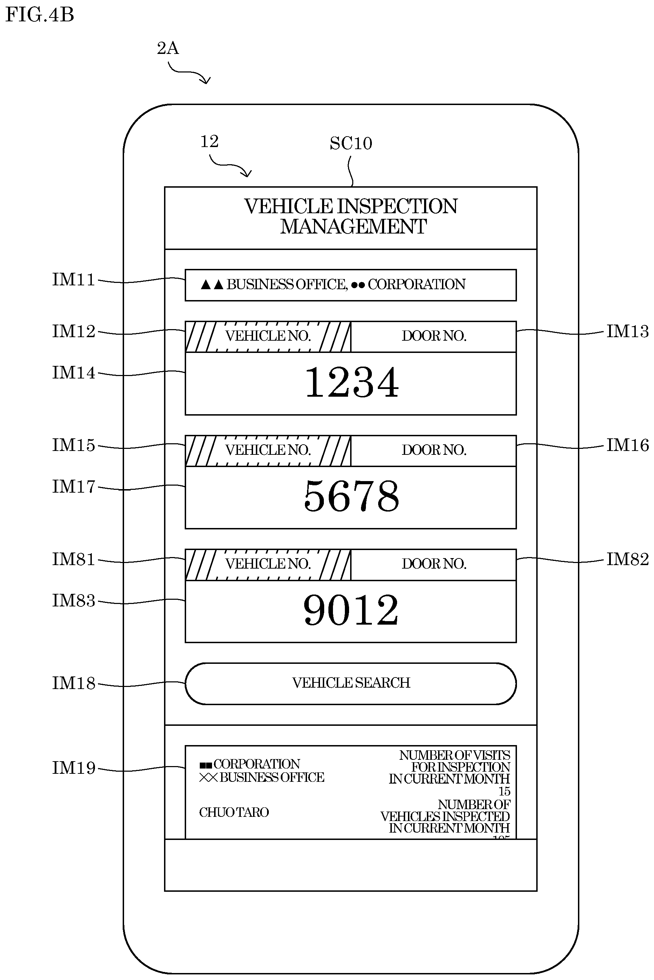

In this case, the first specification processing unit 31A may display a vehicle search screen SC10 shown in FIG. 4B, on the operation display unit 12 instead of the vehicle search screen SC10 shown in FIG. 4A in response to the first call operation.

The vehicle search screen SC10 shown in FIG. 4B is different from the vehicle search screen SC10 shown in FIG. 4A in that selection tabs IM81 and IM82 and a third information input field IM83 are included. The selection tabs IM81 and IM82 are used for designating the type of information to be inputted to the third information input field IM83. A part or all of the vehicle registration number or the door number of the vehicle 5 designated as the third vehicle is inputted to the third information input field IM83.

In the search process when the vehicle search screen SC10 shown in FIG. 4B is displayed, a search for the vehicle data that matches a third search condition is also requested. The third search condition is to include both the information inputted to the business office input field IM11 and the vehicle registration number or the door number inputted to the third information input field IM83.

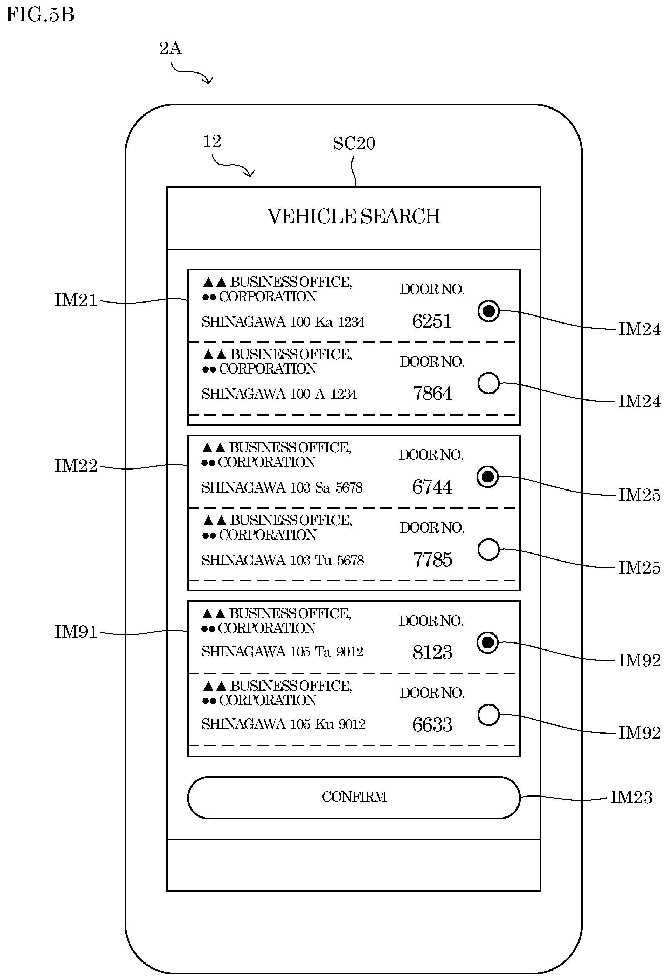

When the third vehicle is to be specified, the first specification processing unit 31A displays a search result display screen SC20 shown in FIG. 5B, on the operation display unit 12 after executing the search process.

The search result display screen SC20 shown in FIG. 5B is different from the search result display screen SC20 shown in FIG. 5A in that a third search result display column IM91 and one or more third radio buttons IM92 are included. In the third search result display column IM91, one or more vehicle data that match the third search condition and are acquired through the search process are displayed. The third radio button IM92 is provided for each of the vehicle data to be displayed in the third search result display column IM91. The third radio button IM92 is used for designating the third vehicle.

In the specification process when the search result display screen SC20 shown in FIG. 5B is displayed, the vehicle 5 corresponding to the vehicle data designated by the third radio button IM92 is specified as the third vehicle.

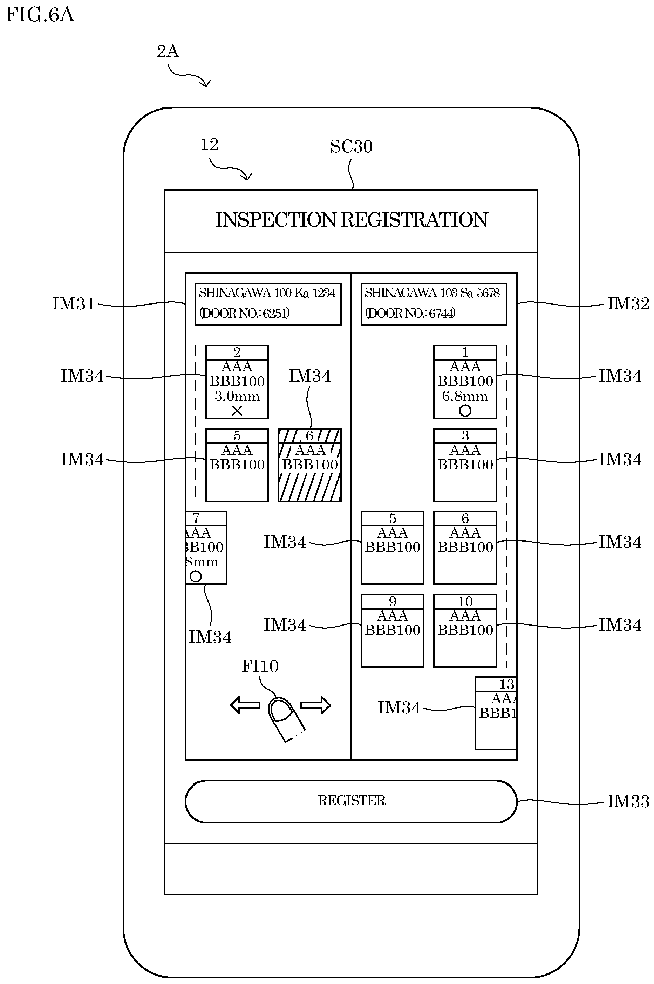

The display processing unit 32A displays a tire information placement screen SC30 (see FIG. 6A) in which a part of a plurality of pieces of the tire information corresponding to a plurality of the tires mounted on the first vehicle 51 is placed on the side in the left direction (an example of a first direction of the present disclosure) and a part of a plurality of pieces of the tire information corresponding to a plurality of the tires mounted on the second vehicle 52 is placed on the side in the right direction (an example of a second direction of the present disclosure).

Specifically, in the tire information placement screen SC30, a part of the plurality of pieces of the tire information corresponding to the first vehicle 51 is placed in a positional relationship corresponding to the plurality of the tire mounting positions in the first vehicle 51. In addition, in the tire information placement screen SC30, a part of the plurality of pieces of the tire information corresponding to the second vehicle 52 is placed in a positional relationship corresponding to the plurality of the tire mounting positions in the second vehicle 52.

In addition, in the tire information placement screen SC30, a part of the plurality of pieces of the tire information corresponding to the first vehicle 51 is placed such that the side in the up direction (an example of a third direction of the present disclosure) is the front side of the first vehicle 51. Also, in the tire information placement screen SC30, a part of the plurality of pieces of the tire information corresponding to the second vehicle 52 is placed such that the side in the up direction is the front side of the second vehicle 52.

The display processing unit 32A also displays each piece of the tire information in a selectable manner and accepts a selection operation for selecting any piece of the tire information. For example, the selection operation is a touch operation on the tire information. The selection operation is not limited to the touch operation and may be any operation on the tire information.

For example, the tire information is a tire icon IM34 shown in FIG. 6A. The tire icon IM34 is an icon image including information regarding the tire. For example, the tire icon IM34 includes the mounting position information, the tire name information, and the tread pattern information. The information included in the tire icon IM34 may be one or more of the plurality of pieces of information constituting the tire data. For example, the tire icon IM34 may include the tire dimension information, the use information, and the retread information. In addition, the information included in the tire icon IM34 may be information different from the information constituting the tire data. In addition, the tire information is not limited to the icon image and may be a character string image indicating information regarding the tire.

For example, the display processing unit 32A generates the tire information placement screen SC30 in the following procedure.

First, the display processing unit 32A acquires a plurality of the tire data corresponding to the first vehicle 51. Specifically, the display processing unit 32A requests the server 1 to search for the tire data including the vehicle ID corresponding to the first vehicle 51. In response to the request from the mobile terminal 2A, the server 1 searches the database 4 for the tire data including the vehicle ID corresponding to the first vehicle 51 and transmits a search result to the mobile terminal 2A. Accordingly, the first specification processing unit 31A can acquire the plurality of the tire data corresponding to the first vehicle 51.

Next, the display processing unit 32A generates a plurality of tire icons IM34 corresponding to the plurality of the tires mounted on the first vehicle 51, on the basis of the obtained plurality of the tire data corresponding to the first vehicle 51.

Next, the display processing unit 32A specifies the plurality of the tire mounting positions in the first vehicle 51. Specifically, the display processing unit 32A specifies the plurality of the tire mounting positions in the first vehicle 51, on the basis of the axle configuration information, the double tire information, and the spare tire information included in the vehicle data corresponding to the first vehicle 51. The display processing unit 32A may specify the plurality of the tire mounting positions in the first vehicle 51, on the basis of the mounting position information included in each of the plurality of the tire data corresponding to the first vehicle 51.

Next, the display processing unit 32A determines a placement position of a part of the plurality of tire icons IM34 corresponding to the first vehicle 51 in the tire information placement screen SC30, on the basis of the specified plurality of the tire mounting positions in the first vehicle 51. Specifically, the display processing unit 32A determines the tire icons IM34 corresponding to the tires mounted on the wheels on the right side in the first vehicle 51 and the tire icon IM34 corresponding to the spare tire among the plurality of tire icons IM34 corresponding to the first vehicle 51, as placement targets. The display processing unit 32A also determines a placement position of each tire icon IM34 to be placed, such that the tire icons IM34 corresponding to the wheels on the right front side in the first vehicle 51 are placed on the upper left side in the tire information placement screen SC30 and the tire icon IM34 corresponding to the wheel on the right rear side in the first vehicle 51 is placed lower than the tire icon IM34 corresponding to the wheel on the right front side.

Next, the display processing unit 32A generates a plurality of tire icons IM34 corresponding to the plurality of the tires mounted on the second vehicle 52, in the same procedure as for the first vehicle 51, and determines a placement position of a part of the plurality of tire icons IM34 corresponding to the second vehicle 52 in the tire information placement screen SC30, on the basis of the plurality of the tire mounting positions in the second vehicle 52.

Then, the display processing unit 32A generates the tire information placement screen SC30 on the basis of the determined placement position of the part of the plurality of tire icons IM34 corresponding to the first vehicle 51 and the determined placement position of the part of the plurality of tire icons IM34 corresponding to the second vehicle 52 in the tire information placement screen SC30.

The display processing unit 32A displays the generated tire information placement screen SC30 on the operation display unit 12.

FIG. 6A shows an example of the tire information placement screen SC30. As shown in FIG. 6A, the tire information placement screen SC30 includes a first vehicle display field IM31, a second vehicle display field IM32, an operation key IM33, and a plurality of tire icons IM34.

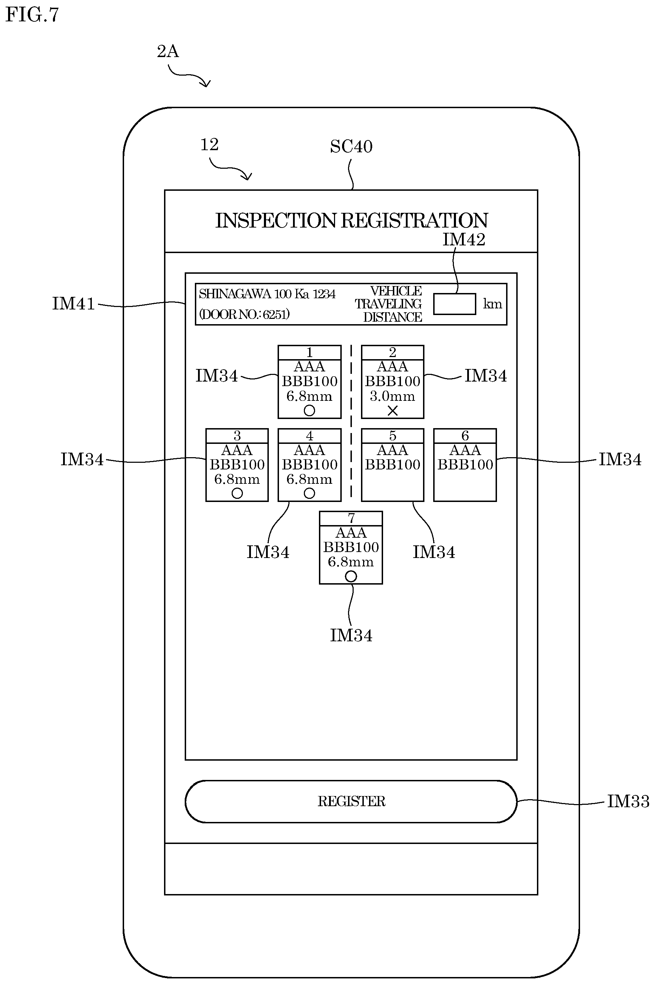

The first vehicle display field IM31 is placed at a position on the left side in the tire information placement screen SC30. In the first vehicle display field IM31, a part of the plurality of tire icons IM34 corresponding to the first vehicle 51 is displayed together with the vehicle registration number and the door number of the first vehicle 51. Specifically, in the first vehicle display field IM31, a plurality of tire icons IM34 corresponding to a plurality of the tires mounted on the right side of the first vehicle 51 and a tire icon IM34 corresponding to the spare tire are displayed in a positional relationship corresponding to the plurality of the tire mounting positions in the first vehicle 51. The first vehicle 51 shown in FIG. 6A is a vehicle 5 in which the axle configuration is the first axle configuration, the rear wheels are double tires, and the spare tire is included (see FIG. 7).

The uppermost number in each tire icon IM34 shown in FIG. 6A is information indicating the mounting position information. In addition, "AAA" included in each tire icon IM34 shown in FIG. 6A is information indicating the tire name information. In addition, "BBB100" included in each tire icon IM34 shown in FIG. 6A is information indicating the tread pattern information.

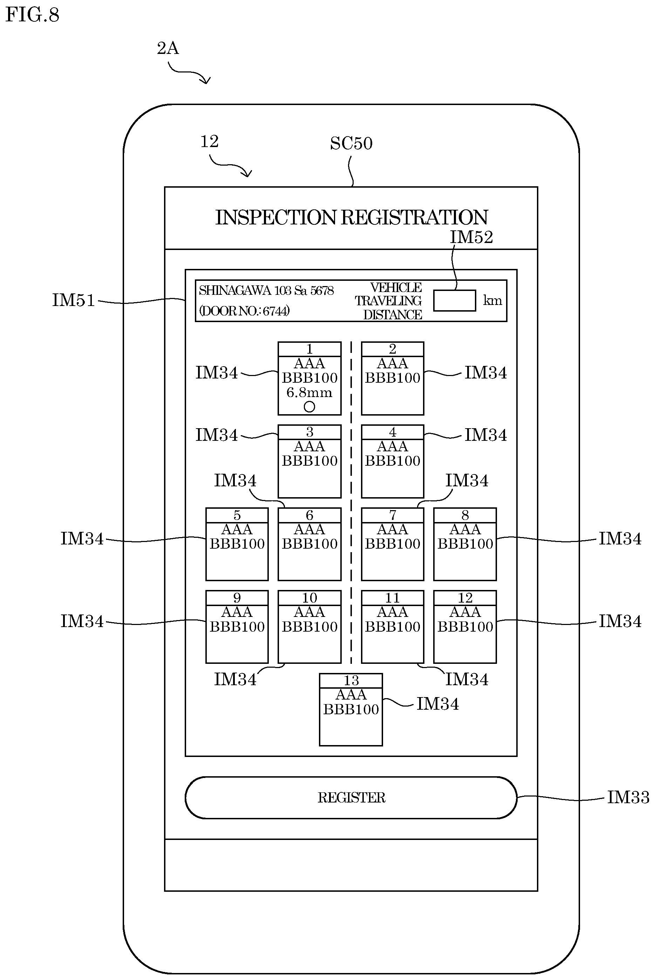

The second vehicle display field IM32 is placed at a position on the right side in the tire information placement screen SC30. In the second vehicle display field IM32, a part of the plurality of tire icons IM34 corresponding to the second vehicle 52 is displayed together with the vehicle registration number and the door number of the second vehicle 52. Specifically, in the second vehicle display field IM32, a plurality of tire icons IM34 corresponding to a plurality of the tires mounted on the left side of the second vehicle 52 and a tire icon IM34 corresponding to the spare tire are displayed in a positional relationship corresponding to the plurality of the tire mounting positions in the second vehicle 52. The second vehicle 52 shown in FIG. 6A is a vehicle 5 in which the axle configuration is the fourth axle configuration, the rear wheels are double tires, and the spare tire is included (see FIG. 8).

The operation key IM33 is used for inputting an instruction to execute a registration process of registering the inspection result data acquired by inspection of the tire, in the database 4.

The display processing unit 32A displays a first direction side screen SC40 (see FIG. 7) in which all of the plurality of pieces of the tire information corresponding to the first vehicle 51 are placed, instead of the tire information placement screen SC30 in response to a flick operation (an example of a first switching operation corresponding to the first direction of the present disclosure) in which a finger FI10 (see FIG. 6A) of the user in contact with the operation display unit 12 is moved so as to flick in the right direction.

Specifically, in the first direction side screen SC40, all of the plurality of pieces of the tire information corresponding to the first vehicle 51 are placed in a positional relationship corresponding to the plurality of the tire mounting positions in the first vehicle 51. In addition, in the first direction side screen SC40, all of the plurality of pieces of the tire information corresponding to the first vehicle 51 are placed such that the side in the up direction is the front side of the first vehicle 51.

FIG. 7 shows an example of the first direction side screen SC40. As shown in FIG. 7, the first direction side screen SC40 includes a first vehicle display field IM 41, a traveling distance input field IM42, an operation key IM33, and a plurality of tire icons IM34.

In the first vehicle display field IM 41, all of the plurality of tire icons IM34 corresponding to the first vehicle 51 are displayed together with the vehicle registration number and the door number of the first vehicle 51. Specifically, in the first vehicle display field IM 41, the plurality of tire icons IM34 corresponding to the first vehicle 51 are displayed in a positional relationship corresponding to the plurality of the tire mounting positions in the first vehicle 51. The traveling distance of the first vehicle 51 is inputted to the traveling distance input field IM42.

In the first vehicle display field IM 41, a part of the plurality of pieces of the tire information corresponding to the first vehicle 51 may be displayed. In this case, the display processing unit 32A may switch the displayed tire information in response to a swipe operation along the up-down direction or the right-left direction, or the like.

The display processing unit 32A displays a second direction side screen SC50 (see FIG. 8) in which all of the plurality of pieces of the tire information corresponding to the second vehicle 52 are placed, instead of the tire information placement screen SC30 in response to a flick operation (an example of a second switching operation corresponding to the second direction of the present disclosure) in which the finger FI10 (see FIG. 6A) of the user in contact with the operation display unit 12 is moved so as to flick in the left direction.

Specifically, in the second direction side screen SC50, all of the plurality of pieces of the tire information corresponding to the second vehicle 52 are placed in a positional relationship corresponding to the plurality of the tire mounting positions in the second vehicle 52. In addition, in the second direction side screen SC50, all of the plurality of pieces of the tire information corresponding to the second vehicle 52 are placed such that the side in the up direction is the front side of the second vehicle 52.

FIG. 8 shows an example of the second direction side screen SC50. As shown in FIG. 8, the second direction side screen SC50 includes a second vehicle display field IM51, a traveling distance input field IM52, an operation key IM33, and a plurality of tire icons IM34.

In the second vehicle display field IM51, all of the plurality of tire icons IM34 corresponding to the second vehicle 52 are displayed together with the vehicle registration number and the door number of the second vehicle 52. Specifically, in the second vehicle display field IM51, the plurality of tire icons IM34 corresponding to the second vehicle 52 are displayed in a positional relationship corresponding to the plurality of the tire mounting positions in the second vehicle 52. The traveling distance of the second vehicle 52 is inputted to the traveling distance input field IM52.

In the second vehicle display field IM51, a part of the plurality of pieces of the tire information corresponding to the second vehicle 52 may be displayed. In this case, the display processing unit 32A may switch the displayed tire information in response to a swipe operation along the up-down direction or the right-left direction, or the like.

The display processing unit 32A may display the first direction side screen SC40 or the second direction side screen SC50 instead of the tire information placement screen SC30 in response to a swipe operation in the right-left direction, or the like, instead of a flick operation in the right-left direction. In addition, the tire information placement screen SC30 may include a first screen switching operation key used for switching to the first direction side screen SC40 and a second screen switching operation key used for switching to the second direction side screen SC50. In this case, the display processing unit 32A may display the first direction side screen SC40 or the second direction side screen SC50 instead of the tire information placement screen SC30 in response to an operation on the first screen switching operation key or the second screen switching operation key.

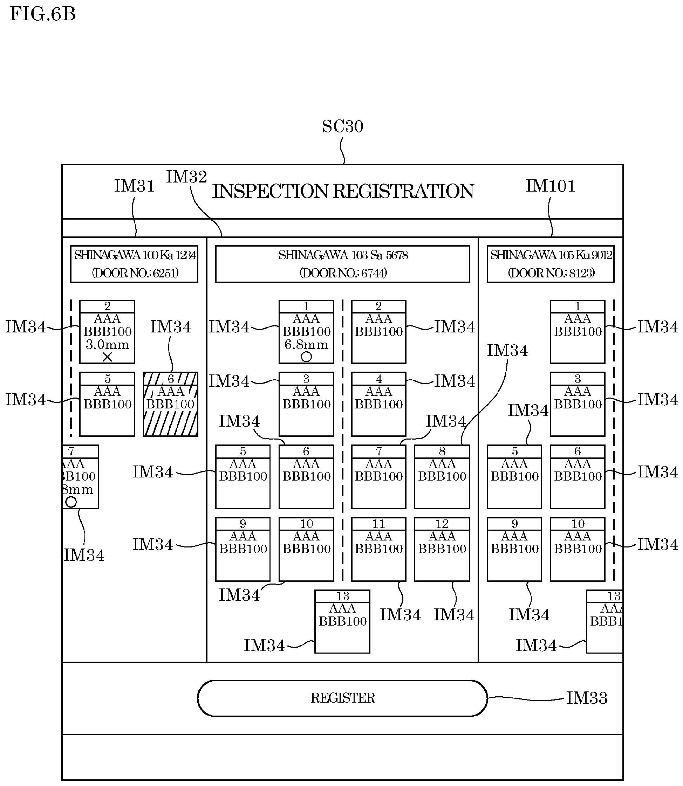

The display processing unit 32A may display a tire information placement screen SC30 shown in FIG. 6B, instead of the tire information placement screen SC30 shown in FIG. 6A, when the third vehicle is to be specified by the first specification processing unit 31A.

In the tire information placement screen SC30 shown in FIG. 6B, a part of the plurality of pieces of the tire information corresponding to the first vehicle 51 is placed on the side in the left direction with respect to the second vehicle 52, and all of the plurality of pieces of the tire information corresponding to the second vehicle 52 are placed on the side in the right direction with respect to the first vehicle 51. In addition, in the tire information placement screen SC30 shown in FIG. 6B, all of the plurality of pieces of the tire information corresponding to the second vehicle 52 are placed on the side in the left direction with respect to the third vehicle, and a part of a plurality of pieces of the tire information corresponding to the third vehicle is placed on the side in the right direction with respect to the second vehicle 52. In the tire information placement screen SC30 shown in FIG. 6B, the first vehicle display field IM31 is placed at a position on the left side in the tire information placement screen SC30. In the tire information placement screen SC30 shown in FIG. 6B, the second vehicle display field IM32 is placed at the center position in the right-left direction in the tire information placement screen SC30. In the tire information placement screen SC30 shown in FIG. 6B, a third vehicle display field IM101 is placed at a position on the right side in the tire information placement screen SC30. In the third vehicle display field IM101, a part of a plurality of tire icons IM34 corresponding to the third vehicle is displayed together with the vehicle registration number and the door number of the third vehicle. When the tire information placement screen SC30 shown in FIG. 6B is displayed, the first vehicle 51 may be a first vehicle of the present disclosure, and the second vehicle 52 may be a second vehicle of the present disclosure, or the second vehicle 52 may be the first vehicle of the present disclosure, and the third vehicle may be the second vehicle of the present disclosure.

When the tire information placement screen SC30 shown in FIG. 6B is displayed, the display processing unit 32A may display the first direction side screen SC40 including all of the plurality of pieces of the tire information corresponding to the first vehicle 51 and a part of the plurality of pieces of the tire information corresponding to the second vehicle 52, instead of the tire information placement screen SC30 shown in FIG. 6B, in response to a flick operation in the right direction. Also, when the tire information placement screen SC30 shown in FIG. 6B is displayed, the display processing unit 32A may display the second direction side screen SC50 including a part of the plurality of pieces of the tire information corresponding to the second vehicle 52 and all of the plurality of pieces of the tire information corresponding to the third vehicle, instead of the tire information placement screen SC30 shown in FIG. 6B, in response to a flick operation in the left direction.

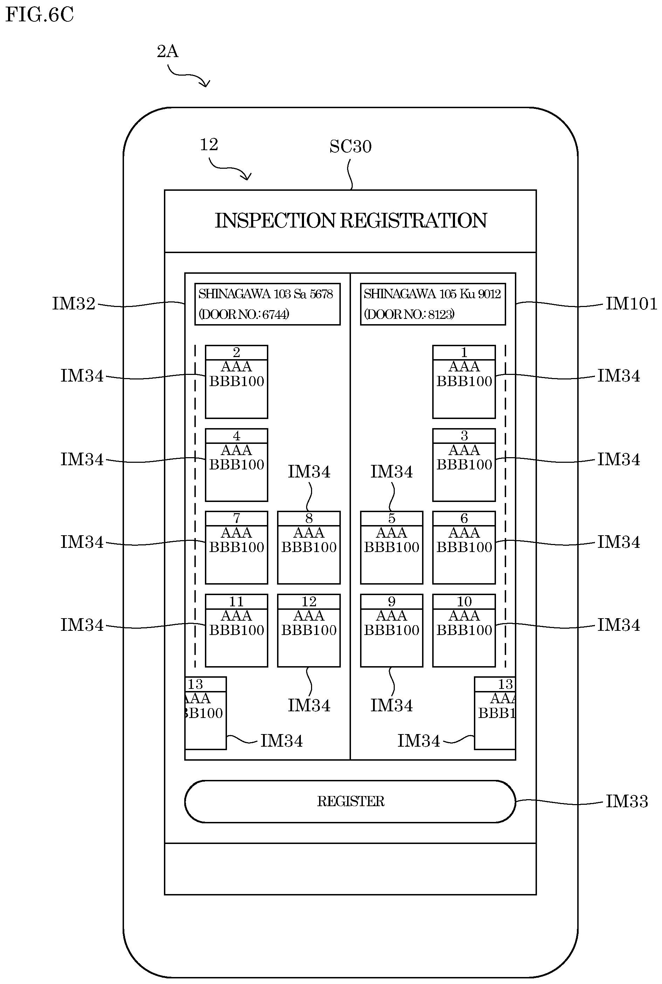

When the third vehicle is to be specified by the first specification processing unit 31A, the display processing unit 32A may display either the tire information placement screen SC30 shown in FIG. 6A or a tire information placement screen SC30 shown in FIG. 6C.

In the tire information placement screen SC30 shown in FIG. 6C, a part of the plurality of pieces of the tire information corresponding to the second vehicle 52 is placed on the side in the left direction, and a part of the plurality of pieces of the tire information corresponding to the third vehicle is placed on the side in the right direction. In the tire information placement screen SC30 shown in FIG. 6C, a second vehicle display field IM32 is placed at a position on the left side in the tire information placement screen SC30. In the tire information placement screen SC30 shown in FIG. 6C, a third vehicle display field IM101 is placed at a position on the right side in the tire information placement screen SC30. In this case, the second vehicle 52 is the first vehicle of the present disclosure, and the third vehicle is the second vehicle of the present disclosure.

When the tire information placement screen SC30 shown in FIG. 6C is displayed, the display processing unit 32A may display the second direction side screen SC50 shown in FIG. 8, instead of the tire information placement screen SC30 shown in FIG. 6C, in response to a flick operation in the right direction. Also, when the tire information placement screen SC30 shown in FIG. 6C is displayed, the display processing unit 32A may display a screen in which all of the plurality of pieces of the tire information corresponding to the third vehicle are placed, instead of the tire information placement screen SC30 shown in FIG. 6C, in response to a flick operation in the left direction.

The acquisition processing unit 33 acquires the inspection result data including an inspection result of the tire.

Specifically, when a touch operation is performed on any of the tire icons IM34 displayed on the operation display unit 12, the acquisition processing unit 33 shifts the operated tire icon IM34 to the selection state and accepts transmission of data including the detection result of the remaining groove of the tire from the remaining groove detection device 3. In addition, when the acquisition processing unit 33 receives the data including the detection result of the remaining groove of the tire from the remaining groove detection device 3, the acquisition processing unit 33 acquires the remaining groove information from the received data. Moreover, the acquisition processing unit 33 acquires the determination result information by determining whether or not the remaining groove of the tire is equal to or greater than the reference value on the basis of the acquired remaining groove information. In FIG. 6A, the tire icon IM34 that has shifted to the selection state is hatched.

When a touch operation is performed on any of the tire icons IM34 displayed on the operation display unit 12, the acquisition processing unit 33 may display an inspection result data input screen used for inputting the inspection result data, on the operation display unit 12. In this case, the acquisition processing unit 33 may acquire information inputted on the inspection result data input screen, as the inspection result data. In the inspection result data input screen, a manual operation for inputting the remaining groove information may be accepted, or transmission of data including the detection result of the remaining groove of the tire from the remaining groove detection device 3 may be accepted. In addition, in the inspection result data input screen, operations for inputting the air pressure information, the scratch information, the wear information, and the photographic image of the tire may be accepted.

The association processing unit 34 associates the inspection result data acquired by the acquisition processing unit 33 with the tire identification information of the tire corresponding to the tire information selected by the selection operation.

Specifically, the tire identification information is the tire ID. The tire identification information is not limited to the tire ID and may be any information with which the tire can be identified. For example, the tire identification information may be a combination of the vehicle ID and the mounting position information.

When the association processing unit 34 associates the inspection result data acquired by the acquisition processing unit 33 with the tire identification information corresponding to the tire information selected by the selection operation, the association processing unit 34 changes the display form of the selected tire information.

For example, when the association processing unit 34 associates the acquired inspection result data with the tire identification information, the association processing unit 34 shifts the tire icon IM34 that has shifted to the selection state, to an unselected state which is a state of not being selected by the user, and adds a character string image indicating the acquired inspection result data, to this tire icon IM34. The association processing unit 34 may change the display color, etc., of the tire icon IM34 for which the inspection result data and the tire identification information are associated.

FIG. 6A shows the tire icons IM34 to which character string images indicating the remaining groove information and the determination result information are added. Specifically, "3.0 mm" or "6.8 mm" included in the tire icon IM34 shown in FIG. 6A is a character string image indicating the remaining groove information. In addition, "∘" or "×" included in the tire icon IM34 shown in FIG. 6A is a character string image indicating the determination result information.

### [First Inspection Result Registration Process]

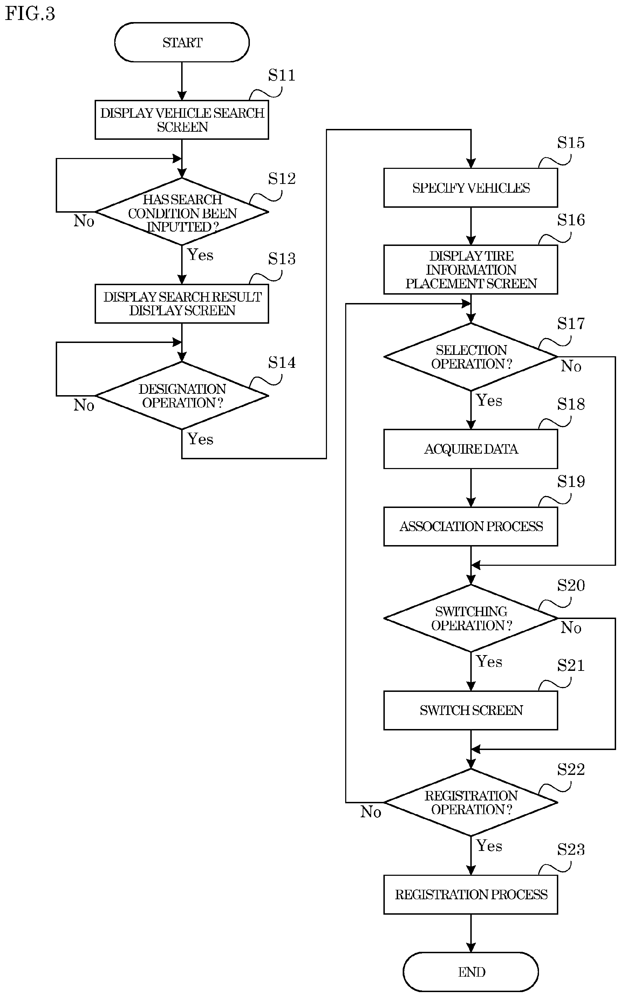

Hereinafter, a tire management method of the present disclosure will be described with reference to FIG. 3, along with an example of the procedure of a first inspection result registration process executed by the control unit 11 of the tire management system 100A. Here, steps S11, S12... represent numbers of processing procedures (steps) executed by the control unit 11.

The first inspection result registration process is executed when the first call operation is performed on the operation display unit 12 of the mobile terminal 2A.

### <Step S11>

First, in step S11, the control unit 11 displays the vehicle search screen SC10 (see FIG. 4A) on the operation display unit 12. The process in step S11 is executed by the first specification processing unit 31A of the control unit 11.

### <Step S12>

In step S12, the control unit 11 determines whether or not a search condition has been inputted on the vehicle search screen SC10.

Specifically, when the operation key IM18 is operated in a state where information has been inputted to each of the business office input field IM11, the first information input field IM14, and the second information input field IM17, the control unit 11 determines that the search condition has been inputted. When the operation key IM18 is operated in a state where information has been inputted to at least each of the first information input field IM14 and the second information input field IM17, the control unit 11 may determine that the search condition has been inputted.

Here, if the control unit 11 determines that the search condition has been inputted (Yes side of S12), the control unit 11 shifts the process to step S13. If the search condition has not been inputted (No side of S12), the control unit 11 waits for input of the search condition in step S12.

### <Step S13>

In step S13, the control unit 11 executes the search process based on the search condition inputted on the vehicle search screen SC10, and displays the search result display screen SC20 (see FIG. 5A) including the execution result of the search process, on the operation display unit 12. The process in step S13 is executed by the first specification processing unit 31A of the control unit 11.

### <Step S14>

In step S14, the control unit 11 determines whether or not a designation operation for designating both the first vehicle 51 and the second vehicle 52 has been performed on the search result display screen SC20.

Specifically, when the operation key IM23 is operated in a state where any of the first radio buttons IM24 has been operated and any of the second radio buttons IM25 has been operated, the control unit 11 determines that the designation operation has been performed.

Here, if the control unit 11 determines that the designation operation has been performed (Yes side of S14), the control unit 11 shifts the process to step S15. If the designation operation has not been performed (No side of S14), the control unit 11 waits for the designation operation in step S14.

### <Step S15>

In step S15, the control unit 11 specifies the first vehicle 51 and the second vehicle 52 on the basis of the designation operation. Here, the process in step S15 is an example of a specification step of the present disclosure and is executed by the first specification processing unit 31A of the control unit 11.

### <Step S16>

In step S16, the control unit 11 generates the tire information placement screen SC30 (see FIG. 6A) on the basis of the result of the process in step S15 and displays the generated tire information placement screen SC30 on the operation display unit 12. Here, the process in step S16 is an example of a display step of the present disclosure and is executed by the display processing unit 32A of the control unit 11.

In step S16, the first direction side screen SC40 (see FIG. 7) or the second direction side screen SC50 (see FIG. 8) may be displayed instead of the tire information placement screen SC30. In addition, the screen displayed in the process of step S16 may be able to be set in advance.

### <Step S17>

In step S17, the control unit 11 determines whether or not the selection operation has been performed on the tire information placement screen SC30, the first direction side screen SC40, or the second direction side screen SC50 displayed on the operation display unit 12.

Specifically, when a touch operation is performed on any of the tire icons IM34 displayed on the operation display unit 12, the control unit 11 determines that the selection operation has been performed.

Here, if the control unit 11 determines that the selection operation has been performed (Yes side of S17), the control unit 11 shifts the process to step S18. If the selection operation has not been performed (No side of S17), the control unit 11 shifts the process to step S20.

### <Step S18>

In step S18, the control unit 11 acquires the inspection result data. Here, the process in step S18 is executed by the acquisition processing unit 33 of the control unit 11.

Specifically, the control unit 11 shifts the tire icon IM34 selected by the selection operation to the selection state and accepts transmission of data including the detection result of the remaining groove of the tire from the remaining groove detection device 3. In addition, when the control unit 11 receives the data including the detection result of the remaining groove of the tire from the remaining groove detection device 3, the control unit 11 acquires the remaining groove information from the received data. Moreover, the control unit 11 acquires the determination result information by determining whether or not the remaining groove of the tire is equal to or greater than the reference value on the basis of the acquired remaining groove information.

### <Step S19>

In step S19, the control unit 11 executes an association process of associating the inspection result data acquired through the process in step S18 with the tire identification information of the tire corresponding to the tire icon IM34 selected by the selection operation. Here, the process in step S19 is executed by the association processing unit 34 of the control unit 11.

Specifically, in the association process, the acquired inspection result data is associated with the tire ID corresponding to the tire icon IM34 selected by the selection operation. In addition, in the association process, a character string image indicating the acquired inspection result data is added to the selected tire icon IM34. Accordingly, it is possible to identifiably display the tire for which the inspection work has been completed.

### <Step S20>

In step S20, the control unit 11 determines whether or not a switching operation for instructing switching of the screen to be displayed has been performed.

Specifically, when a flick operation is performed in either the left direction or the right direction while the tire information placement screen SC30 (see FIG. 6A) is being displayed, the control unit 11 determines that the switching operation has been performed.
Also, when a flick operation is performed in the left direction while the first direction side screen SC40 (see FIG. 7) is being displayed, the control unit 11 determines that the switching operation has been performed. Also, when a flick operation is performed in the right direction while the second direction side screen SC50 (see FIG. 8) is being displayed, the control unit 11 determines that the switching operation has been performed.

Here, if the control unit 11 determines that the switching operation has been performed (Yes side of S20), the control unit 11 shifts the process to step S21. If the switching operation has not been performed (No side of S20), the control unit 11 shifts the process to step S22.

### <Step S21>

In step S21, the control unit 11 switches the screen to be displayed. The process in step S21 is executed by the display processing unit 32A of the control unit 11.

Specifically, when a flick operation is performed in the right direction while the tire information placement screen SC30 (see FIG. 6A) is being displayed, the control unit 11 displays the first direction side screen SC40 (see FIG. 7) instead of the tire information placement screen SC30. Also, when a flick operation is performed in the left direction while the tire information placement screen SC30 is being displayed, the control unit 11 displays the second direction side screen SC50 (see FIG. 8) instead of the tire information placement screen SC30. Also, when a flick operation is performed in the left direction while the first direction side screen SC40 is being displayed, the control unit 11 displays the tire information placement screen SC30 instead of the first direction side screen SC40. Also, when a flick operation is performed in the right direction while the second direction side screen SC50 is being displayed, the control unit 11 displays the tire information placement screen SC30 instead of the second direction side screen SC50.

### <Step S22>

In step S22, the control unit 11 determines whether or not a registration operation for instructing execution of the registration process of registering the inspection result data in the database 4 has been performed on the tire information placement screen SC30, the first direction side screen SC40, or the second direction side screen SC50 displayed on the operation display unit 12.

Specifically, when a touch operation is performed on the operation key IM33 (see FIG. 6A, FIG. 7, or FIG. 8) displayed on the operation display unit 12, the control unit 11 determines that the registration operation has been performed.

Here, if the control unit 11 determines that the registration operation has been performed (Yes side of S22), the control unit 11 shifts the process to step S23. If the registration operation has not been performed (No side of S22), the control unit 11 shifts the process to step S17.

### <Step S23>

In step S23, the control unit 11 executes the registration process.

Specifically, in the registration process, the date at the time of execution of step S23 is acquired as the inspection date information. In addition, in the registration process, the business entity information and the business office information included in the vehicle data corresponding to the first vehicle 51 or the second vehicle 52 are acquired as the inspection location information. Moreover, in the registration process, information indicating the name of the worker and included in the worker information stored in the storage unit 14 is acquired as the inspection worker information. Moreover, in the registration process, information inputted to the traveling distance input field IM42 of the first direction side screen SC40 is acquired as the vehicle traveling distance information corresponding to the first vehicle 51. Moreover, in the registration process, information inputted to the traveling distance input field IM52 of the second direction side screen SC50 is acquired as the vehicle traveling distance information corresponding to the second vehicle 52.

Also, in the registration process, for each of the inspection result data associated with the tire ID in step S19, a transmission process of transmitting the inspection result data to the server 1 is executed. Specifically, in the transmission process, data including the inspection result data, the tire ID associated with the inspection result data, the acquired inspection date information, the acquired inspection location information, the acquired inspection worker information, the acquired vehicle traveling distance information corresponding to the first vehicle 51 or the second vehicle 52, and a request for registration in the database 4 is transmitted to the server 1. Accordingly, in the server 1, a new tire inspection ID corresponding to the transmitted data is generated, and new tire inspection data composed of the generated tire inspection ID and each piece of the information included in the transmitted data is registered in the database 4. When the registration process is executed, information indicating the number of vehicles 5 inspected by the worker during the aggregation period, which is included in the worker information, is updated.

As described above, in the tire management system 100A, when the first vehicle 51 and the second vehicle 52 are designated by the user, the tire information placement screen SC30, in which a part of the plurality of pieces of the tire information corresponding to the first vehicle 51 is placed on the side in the left direction and a part of the plurality of pieces of the tire information corresponding to the second vehicle 52 is placed on the side in the right direction, is displayed. Accordingly, it is possible to collectively display a plurality of pieces of the tire information corresponding to a plurality of vehicles 5 parked so as to be aligned with each other, for each vehicle 5. Therefore, when, between the two vehicles 5 parked so as to be aligned with each other, the tire of one vehicle 5 and the tire of the other vehicle 5 are alternately inspected, it is possible to omit the time and effort for performing an operation for displaying the tire information of the other vehicle 5 by the worker who performs the inspection work, each time the inspection work on the tire of the one vehicle 5 is completed.

In the tire information placement screen SC30, a part of the plurality of pieces of the tire information corresponding to the first vehicle 51 is placed and a part of the plurality of pieces of the tire information corresponding to the second vehicle 52 is placed such that the side in either left or right direction is the front side of the first vehicle 51 and the second vehicle 52 instead of either up or down direction. Accordingly, it is possible to collectively display a plurality of pieces of the tire information corresponding to a plurality of vehicles 5 parked parallel, for each vehicle 5.

In the tire information placement screen SC30, a part of the plurality of pieces of the tire information corresponding to the first vehicle 51 may be placed in a manner unrelated to a positional relationship corresponding to the plurality of the tire mounting positions in the first vehicle 51, and a part of the plurality of pieces of the tire information corresponding to the second vehicle 52 may be placed in a manner unrelated to a positional relationship corresponding to the plurality of the tire mounting positions in the second vehicle 52.

In the tire information placement screen SC30, a part of the plurality of pieces of the tire information corresponding to the first vehicle 51 may be placed on the side in the up direction (another example of the first direction of the present disclosure), and a part of the plurality of pieces of the tire information corresponding to the second vehicle 52 may be placed on the side in the down direction (another example of the second direction of the present disclosure).

In the tire information placement screen SC30, all of the plurality of pieces of the tire information corresponding to the first vehicle 51 may be placed on the side in the left direction, and all of the plurality of pieces of the tire information corresponding to the second vehicle 52 may be placed on the side in the right direction. In this case, in response to a pinch-out or pinch-in operation on the tire information placement screen SC30, the display processing unit 32A may enlarge or reduce the screen.

The display processing unit 32A may also display each piece of the tire information in a non-selectable manner.

Some or all of the processing units included in the control unit 11 may be provided in the server 1. For example, the server 1 may include the first specification processing unit 31A, the display processing unit 32A, the acquisition processing unit 33, and the association processing unit 34. In this case, the server 1 is another example of the tire management system of the present disclosure.

### [Second Embodiment]

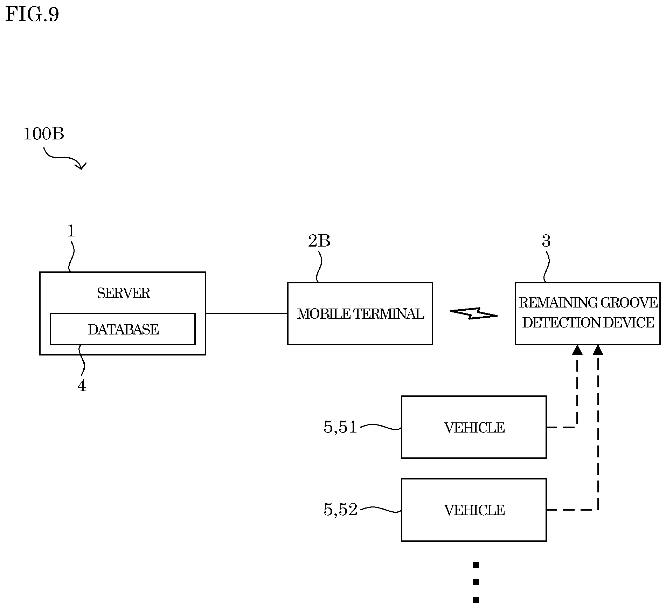

Next, the configuration of a tire management system 100B according to a second embodiment of the present disclosure will be described with reference to FIG. 1 and FIG. 9.

As shown in FIG. 1 and FIG. 9, the tire management system 100B is different from the tire management system 100A in that a mobile terminal 2B is included instead of the mobile terminal 2A. The other configuration is common to the tire management system 100A and the tire management system 100B. Hereinafter, of the configuration of the tire management system 100B, only the differences from the tire management system 100A will be described.

### [Configuration of Mobile Terminal 2B]

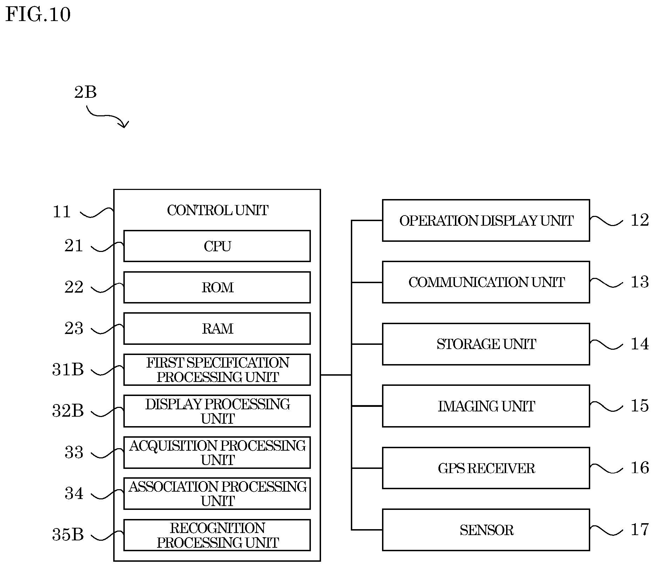

Next, the configuration of the mobile terminal 2B will be described with reference to FIG. 2 and FIG. 10.

As shown in FIG. 2 and FIG. 10, the mobile terminal 2B is different from the mobile terminal 2A in that a first specification processing unit 31B and a display processing unit 32B are included instead of the first specification processing unit 31A and the display processing unit 32A and in that a recognition processing unit 35B is included. The other configuration is common to the mobile terminal 2A and the mobile terminal 2B. Hereinafter, of the configuration of the mobile terminal 2B, only the differences from the mobile terminal 2A will be described.

The recognition processing unit 35B executes a recognition process of recognizing vehicle identification information of each vehicle 5 included in the capture image captured by the imaging unit 15.

For example, the vehicle identification information is a vehicle registration number displayed on the license plate of the vehicle 5. The vehicle identification information is not limited to the vehicle registration number and may be any information with which the vehicle 5 can be identified.

For example, the recognition processing unit 35B executes the recognition process on the basis of a first capture image specified on the basis of the timing of a predetermined imaging operation among the capture images sequentially outputted from the imaging unit 15 at a predetermined first interval. For example, the first interval is about 0.1 seconds.

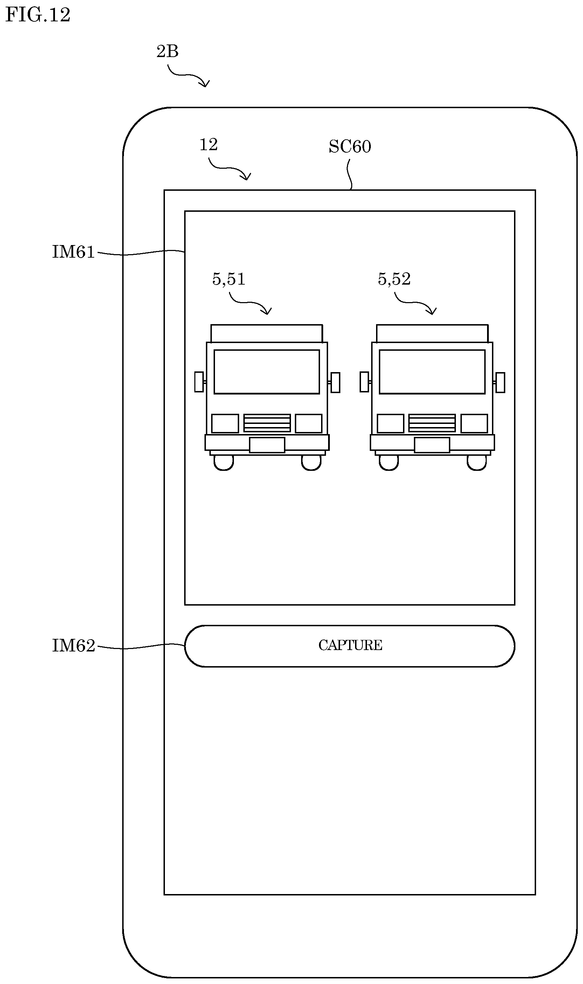

For example, the recognition processing unit 35B displays a capture image display screen SC60 shown in FIG. 12, on the operation display unit 12 in response to a predetermined second call operation.

The capture image display screen SC60 is a screen used for acquiring the first capture image. As shown in FIG. 12, the capture image display screen SC60 includes a capture image display filed IM61 and an operation key IM62.

In the capture image display field IM61, the capture image outputted from the imaging unit 15 at the first interval is displayed. The operation key IM62 is used for the imaging operation. For example, the imaging operation is a touch operation on the operation key IM62.

When a touch operation is performed on the operation key IM62, the recognition processing unit 35B acquires, as the first capture image, the one capture image specified on the basis of the timing of the touch operation among the capture images sequentially outputted from the imaging unit 15 at the first interval. Then, the recognition processing unit 35B executes the recognition process on the basis of the acquired first capture image. Specifically, in the recognition process, a license plate image indicating the license plate of the vehicle 5 is extracted from the first capture image. Then, a character recognition process is executed on the extracted license plate image, whereby the vehicle identification information is recognized.

The recognition processing unit 35B may automatically (without user operation) acquire the capture image outputted from the imaging unit 15 at every second interval longer than the first interval and execute the recognition process on the basis of the acquired capture image. In this case, the capture image display screen SC60 does not have to include the operation key IM62.

The first specification processing unit 31B specifies the first vehicle 51 and the second vehicle 52 on the basis of the vehicle identification information recognized by the recognition processing unit 35B.

Specifically, when two pieces of the vehicle identification information corresponding to two vehicles 5 (see FIG. 12) aligned side by side in the capture image are recognized by the recognition processing unit 35B, the first specification processing unit 31B specifies the vehicle 5 on the left side in the capture image as the first vehicle 51 and specifies the vehicle 5 on the right side in the capture image as the second vehicle 52.

When the recognition process is executed at every second interval, the first specification processing unit 31B may specify the vehicle 5 corresponding to the first recognized vehicle identification information as the first vehicle 51 and specify the vehicle 5 corresponding to the next recognized vehicle identification information as the second vehicle 52.

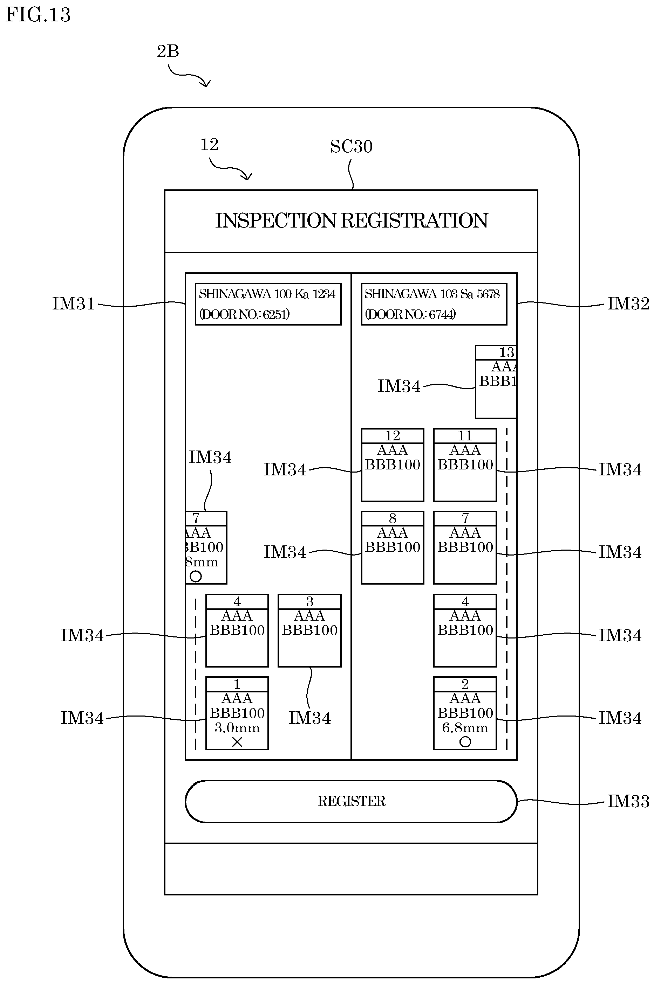

The display processing unit 32B displays the tire information placement screen SC30 (see FIG. 13) in which a part of the plurality of pieces of the tire information corresponding to the first vehicle 51 is placed on the side in the left direction and a part of the plurality of pieces of the tire information corresponding to the second vehicle 52 is placed on the side in the right direction.

Specifically, in the tire information placement screen SC30 displayed by the display processing unit 32B, a part of the plurality of pieces of the tire information corresponding to the first vehicle 51 is placed in a positional relationship corresponding to the plurality of the tire mounting positions in the first vehicle 51 such that the side in the down direction in the tire information placement screen SC30 is the front side of the first vehicle 51. In addition, in the tire information placement screen SC30 displayed by the display processing unit 32B, a part of the plurality of pieces of the tire information corresponding to the second vehicle 52 is placed in a positional relationship corresponding to the plurality of the tire mounting positions in the second vehicle 52 such that the side in the down direction in the tire information placement screen SC30 is the front side of the second vehicle 52.

The display processing unit 32B also displays each piece of the tire information in a selectable manner and accepts the selection operation for selecting any piece of the tire information.

FIG. 13 shows an example of the tire information placement screen SC30 displayed by the display processing unit 32B.

The display processing unit 32B displays the first direction side screen SC40 in which all of the plurality of pieces of the tire information corresponding to the first vehicle 51 are placed, instead of the tire information placement screen SC30 in response to a flick operation in the right direction. In the first direction side screen SC40 displayed by the display processing unit 32B, all of the plurality of pieces of the tire information corresponding to the first vehicle 51 are placed in a positional relationship corresponding to the plurality of the tire mounting positions in the first vehicle 51 such that the side in the down direction in the first direction side screen SC40 is the front side of the first vehicle 51.

The display processing unit 32B displays the second direction side screen SC50 in which all of the plurality of pieces of the tire information corresponding to the second vehicle 52 are placed, instead of the tire information placement screen SC30 in response to a flick operation in the left direction. In the second direction side screen SC50 displayed by the display processing unit 32B, all of the plurality of pieces of the tire information corresponding to the second vehicle 52 are placed in a positional relationship corresponding to the plurality of the tire mounting positions in the second vehicle 52 such that the side in the down direction in the second direction side screen SC50 is the front side of the second vehicle 52.

### [Second Inspection Result Registration Process]

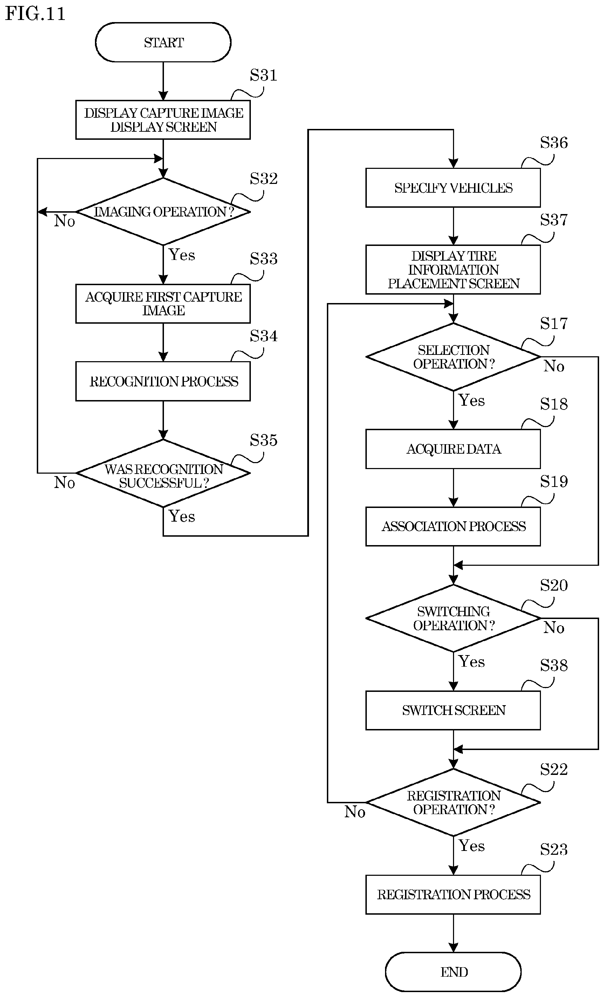

Hereinafter, an example of the procedure of a second inspection result registration process executed by the control unit 11 of the tire management system 100B will be described with reference to FIG. 3 and FIG. 11.

As shown in FIG. 3 and FIG. 11, the second inspection result registration process is different from the first inspection result registration process in that processes in step S31 to step S37 are executed instead of the processes in step S11 to step S16 and in that a process in step S38 is executed instead of the process in step S21. The other processes are common to the first inspection result registration process and the second inspection result registration process. Hereinafter, among the processes included in the second inspection result registration process, only processes different from those of the first inspection result registration process will be described.

The second inspection result registration process is executed when the second call operation is performed on the operation display unit 12 of the mobile terminal 2B.

### <Step S31>

In step S31, the control unit 11 displays the capture image display screen SC60 (see FIG. 12) on the operation display unit 12. The process in step S31 is executed by the recognition processing unit 35B of the control unit 11.

### <Step S32>

In step S32, the control unit 11 determines whether or not the imaging operation has been performed.

Specifically, when a touch operation is performed on the operation key IM62 in the capture image display screen SC60, the control unit 11 determines that the imaging operation has been performed.

Here, if the control unit 11 determines that the imaging operation has been performed (Yes side of S32), the control unit 11 shifts the process to step S33. If the imaging operation has not been performed (No side of S32), the control unit 11 waits for the imaging operation to be performed, in step S32.

### <Step S33>

In step S33, the control unit 11 acquires, as the first capture image, the one capture image specified on the basis of the timing of the imaging operation among the capture images sequentially outputted from the imaging unit 15 at the first interval. The process in step S33 is executed by the recognition processing unit 35B of the control unit 11.

### <Step S34>

In step S34, the control unit 11 executes the recognition process on the basis of the first capture image acquired through the process in step S33. The process in step S34 is executed by the recognition processing unit 35B of the control unit 11.

### <Step S35>

In step S35, the control unit 11 determines whether or not the recognition process was successful.

Specifically, when two pieces of the vehicle identification information corresponding to two vehicles 5 aligned side by side in the first capture image are recognized by the recognition process, the control unit 11 determines that the recognition process was successful.

Here, if the control unit 11 determines that the recognition process was successful (Yes side of S35), the control unit 11 shifts the process to step S36. If the recognition process was not successful (No side of S35), the control unit 11 shifts the process to step S32.

### <Step S36>

In step S36, the control unit 11 specifies the vehicle 5 on the left side in the first capture image as the first vehicle 51 and specifies the vehicle 5 on the right side in the first capture image as the second vehicle 52. The process in step S36 is the executed by the first specification processing unit 31B of the control unit 11.

### <Step S37>

In step S37, the control unit 11 generates the tire information placement screen SC30 (see FIG. 13) on the basis of the result of the process in step S36 and displays the generated tire information placement screen SC30 on the operation display unit 12. The process in step S37 is executed by the display processing unit 32B of the control unit 11.

In step S37, the first direction side screen SC40 or the second direction side screen SC50 may be displayed instead of the tire information placement screen SC30.

### <Step S38>

In step S38, the control unit 11 switches the screen to be displayed. The process in step S38 is executed by the display processing unit 32B of the control unit 11.

Specifically, when a flick operation is performed in the right direction while the tire information placement screen SC30 (see FIG. 13) is being displayed, the control unit 11 displays the first direction side screen SC40 instead of the tire information placement screen SC30. Also, when a flick operation is performed in the left direction while the tire information placement screen SC30 is being displayed, the control unit 11 displays the second direction side screen SC50 instead of the tire information placement screen SC30. Also, when a flick operation is performed in the left direction while the first direction side screen SC40 is being displayed, the control unit 11 displays the tire information placement screen SC30 instead of the first direction side screen SC40. Also, when a flick operation is performed in the right direction while the second direction side screen SC50 is being displayed, the control unit 11 displays the tire information placement screen SC30 instead of the second direction side screen SC50.

As described above, in the tire management system 100B, the vehicle identification information of each vehicle 5 included in the capture image captured by the imaging unit 15 is recognized. Then, the first vehicle 51 and the second vehicle 52 are specified on the basis of the recognized vehicle identification information. Accordingly, it is possible to specify the first vehicle 51 and the second vehicle 52 with less time and effort for operation as compared to a configuration in which the first vehicle 51 and the second vehicle 52 are specified on the basis of character information indicating the vehicle identification information and inputted by the user.

### [Third Embodiment]

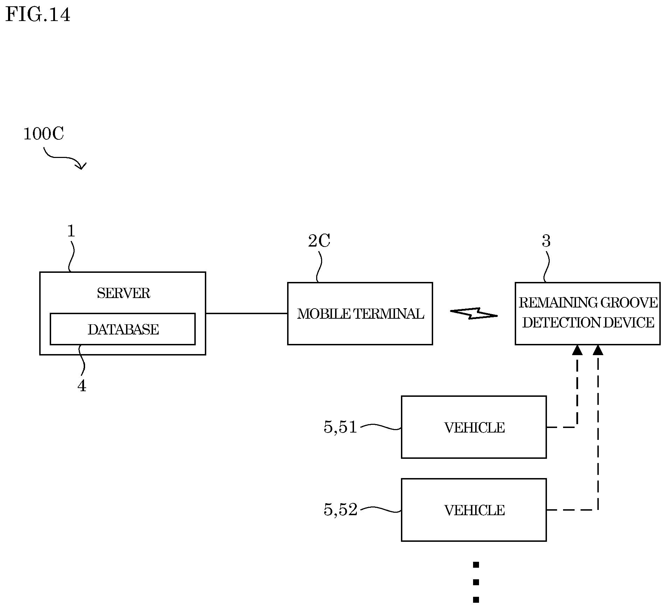

Next, the configuration of a tire management system 100C according to a third embodiment of the present disclosure will be described with reference to FIG. 9 and FIG. 14.

As shown in FIG. 9 and FIG. 14, the tire management system 100C is different from the tire management system 100B in that a mobile terminal 2C is included instead of the mobile terminal 2B. The other configuration is common to the tire management system 100B and the tire management system 100C. Hereinafter, of the configuration of the tire management system 100C, only the differences from the tire management system 100B will be described.

### [Configuration of Mobile Terminal 2C]

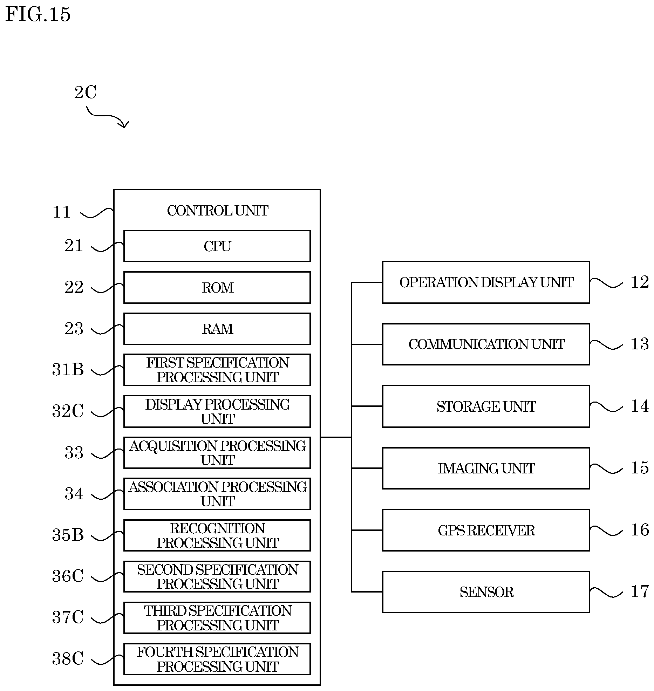

Next, the configuration of the mobile terminal 2C will be described with reference to FIG. 10 and FIG. 15.

As shown in FIG. 10 and FIG. 15, the mobile terminal 2C is different from the mobile terminal 2B in that a display processing unit 32C is included instead of the display processing unit 32B and in that a second specification processing unit 36C, a third specification processing unit 37C, and a fourth specification processing unit 38C are included. The other configuration is common to the mobile terminal 2B and the mobile terminal 2C. Hereinafter, of the configuration of the mobile terminal 2C, only the differences from the mobile terminal 2B will be described.

The second specification processing unit 36C specifies the position of the imaging unit 15 at every predetermined third interval (an example of a specification interval of the present disclosure) from a specification timing at which a second capture image (an example of a specification capture image of the present disclosure) including the first vehicle 51 and the second vehicle 52 aligned side by side is captured.

Specifically, the second specification processing unit 36C specifies the position of the imaging unit 15 using the GPS receiver 16.

For example, the third interval is any time from 1 second and 10 seconds.

The third specification processing unit 37C specifies the imaging direction of the imaging unit 15 at the specification timing.

Specifically, the third specification processing unit 37C specifies the imaging direction using the sensor 17.

The fourth specification processing unit 38C specifies the position of each of the first vehicle 51 and the second vehicle 52 on the basis of the second capture image, the position of the imaging unit 15 specified at the specification timing by the second specification processing unit 36C, and the imaging direction specified by the third specification processing unit 37C.

The fourth specification processing unit 38C also specifies the position of each of the plurality of the tires corresponding to the first vehicle 51 and the position of each of the plurality of the tires corresponding to the second vehicle 52.

For example, the fourth specification processing unit 38C calculates the distance between the license plate of the first vehicle 51 and the imaging unit 15 at the specification timing on the basis of the size of the license plate image of the first vehicle 51 included in the second capture image, the plate size information included in the vehicle data corresponding to the first vehicle 51, and the imaging magnification of the imaging unit 15.

By calculating the distance between the license plate of the first vehicle 51 and the imaging unit 15, it is possible to specify the position of the first vehicle 51 on the basis of the position and the imaging direction of the imaging unit 15 at the specification timing. In addition, it is possible to specify the position of each of the tires included in the first vehicle 51, on the basis of the vehicle dimension information, the axle configuration information, the double tire information, and the spare tire information included in the vehicle data corresponding to the first vehicle 51.

The fourth specification processing unit 38C also calculates the distance between the license plate of the second vehicle 52 and the imaging unit 15 at the specification timing on the basis of the size of the license plate image of the second vehicle 52 included in the second capture image, the plate size information included in the vehicle data corresponding to the second vehicle 52, and the imaging magnification of the imaging unit 15. Accordingly, it is possible to specify the position of the second vehicle 52 on the basis of the position and the imaging direction of the imaging unit 15 at the specification timing. In addition, it is possible to specify the position of each of the tires included in the second vehicle 52, on the basis of the vehicle dimension information, the axle configuration information, the double tire information, and the spare tire information included in the vehicle data corresponding to the second vehicle 52.

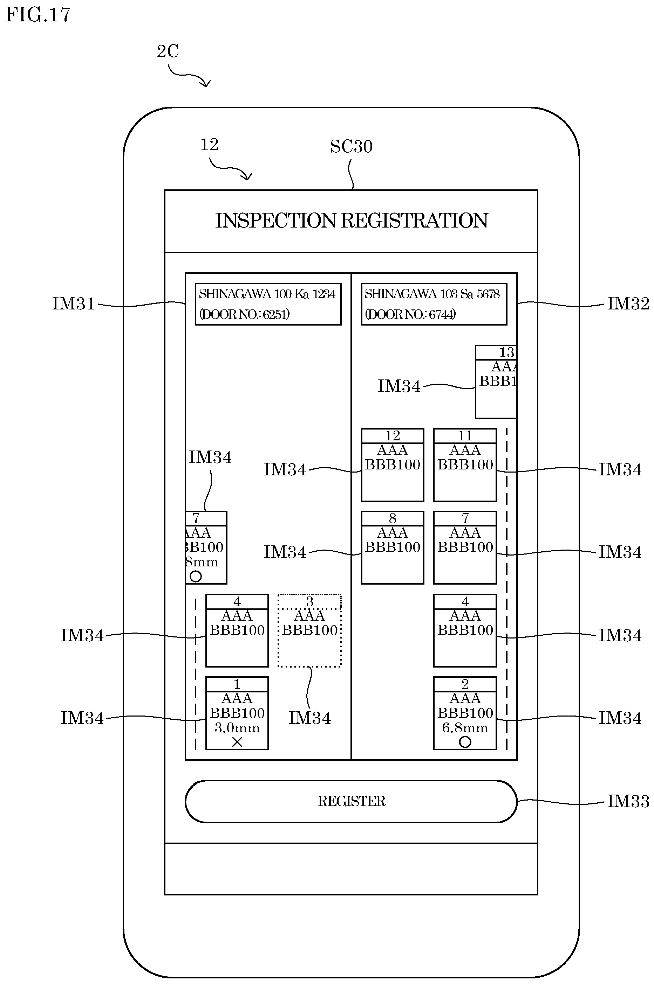

The display processing unit 32C displays the tire information placement screen SC30 (see FIG. 17) in which a part of the plurality of pieces of the tire information corresponding to the first vehicle 51 is placed on the side in the left direction and a part of the plurality of pieces of the tire information corresponding to the second vehicle 52 is placed on the side in the right direction.

Specifically, in the tire information placement screen SC30 displayed by the display processing unit 32C, a part of the plurality of pieces of the tire information corresponding to the first vehicle 51 is placed in a positional relationship corresponding to the plurality of the tire mounting positions in the first vehicle 51 such that the side in the down direction in the tire information placement screen SC30 is the front side of the first vehicle 51. In addition, in the tire information placement screen SC30 displayed by the display processing unit 32C, a part of the plurality of pieces of the tire information corresponding to the second vehicle 52 is placed in a positional relationship corresponding to the plurality of the tire mounting positions in the second vehicle 52 such that the side in the down direction in the tire information placement screen SC30 is the front side of the second vehicle 52.

The display processing unit 32C also displays each piece of the tire information in a selectable manner and accepts the selection operation for selecting any piece of the tire information.

In response to the movement of the position of the imaging unit 15 specified by the second specification processing unit 36C after the specification timing, the display processing unit 32C switches the screen to be displayed, between the tire information placement screen SC30, the first direction side screen SC40 in which all of the plurality of pieces of the tire information corresponding to the first vehicle 51 are placed, and the second direction side screen SC50 in which all of the plurality of pieces of the tire information corresponding to the second vehicle 52 are placed.

In the first direction side screen SC40 displayed by the display processing unit 32C, all of the plurality of pieces of the tire information corresponding to the first vehicle 51 are placed in a positional relationship corresponding to the plurality of the tire mounting positions in the first vehicle 51 such that the side in the down direction in the first direction side screen SC40 is the front side of the first vehicle 51. Also, in the second direction side screen SC50 displayed by the display processing unit 32C, all of the plurality of pieces of the tire information corresponding to the second vehicle 52 are placed in a positional relationship corresponding to the plurality of the tire mounting positions in the second vehicle 52 such that the side in the down direction in the second direction side screen SC50 is the front side of the second vehicle 52.

For example, when the position of the imaging unit 15 moves beyond the position of the license plate of the first vehicle 51 to the first vehicle 51 side (right side of the first vehicle 51) in the alignment direction in which the first vehicle 51 and the second vehicle 52 are aligned, the display processing unit 32C displays the first direction side screen SC40 instead of the tire information placement screen SC30.

Also, when the position of the imaging unit 15 moves beyond the position of the license plate of the first vehicle 51 to the second vehicle 52 side (left side of the first vehicle 51) in the alignment direction, the display processing unit 32C displays the tire information placement screen SC30 instead of the first direction side screen SC40.

Also, when the position of the imaging unit 15 moves beyond the position of the license plate of the second vehicle 52 to the second vehicle 52 side (left side of the second vehicle 52) in the alignment direction, the display processing unit 32C displays the second direction side screen SC50 instead of the tire information placement screen SC30.

Also, when the position of the imaging unit 15 moves beyond the position of the license plate of the second vehicle 52 to the first vehicle 51 side (right side of the second vehicle 52) in the alignment direction, the display processing unit 32C displays the tire information placement screen SC30 instead of the second direction side screen SC50.

Also, the display processing unit 32C identifiably displays the tire information corresponding to the tire that exists within a predetermined specific range from the position of the imaging unit 15 specified by the second specification processing unit 36C after the specification timing.

Specifically, the display processing unit 32C determines the presence or absence of the tire that exists within the specific range from the position of the imaging unit 15 on the basis of the position of the imaging unit 15 specified by the second specification processing unit 36C after the specification timing, the position of each of the plurality of the tires corresponding to the first vehicle 51 specified by the fourth specification processing unit 38C, and the position of the plurality of the tires corresponding to the second vehicle 52 specified by the fourth specification processing unit 38C.

For example, the display processing unit 32C displays, in a blinking manner, the tire icon IM34 corresponding to the tire that exists within the specific range from the position of the imaging unit 15 specified by the second specification processing unit 36C after the specification timing. The method of identifiably displaying the tire icon IM34 corresponding to the tire that exists within the specific range from the position of the imaging unit 15 is not limited to displaying in a blinking manner. For example, the display processing unit 32C may change one or more of the color, density, line width, and size of the tire icon IM34. In addition, by changing the display form of each of the other tire icons IM34, the tire icon IM34 corresponding to the tire that exists within the specific range from the position of the imaging unit 15 may be highlighted relatively.

For example, the specific range is any distance from 1 meter to 3 meters. The specific range may be arbitrarily changeable by an operation on the operation display unit 12 by the user.

FIG. 17 shows an example of the tire information placement screen SC30 displayed by the display processing unit 32C. In FIG. 17, the tire icon IM34 displayed in a blinking manner is shown by a dotted line.

When there are a plurality of pieces of the tire information corresponding to the tires that exist within the specific range from the position of the imaging unit 15, the display processing unit 32C may identifiably display only the piece of the tire information corresponding to the tire closest to the position of the imaging unit 15. In addition, when the display form of the tire information corresponding to the tire that exists within the specific range from the position of the imaging unit 15 is changed by the association processing unit 34, the display processing unit 32C does not have to identifiably display the tire information.

### [Third Inspection Result Registration Process]

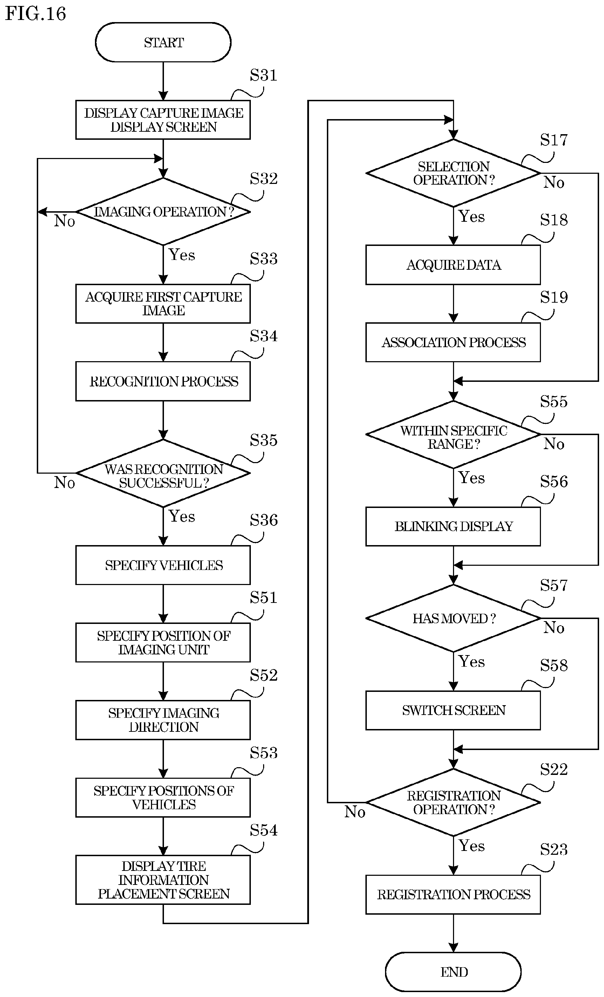

Hereinafter, an example of the procedure of a third inspection result registration process executed by the control unit 11 of the tire management system 100C will be described with reference to FIG. 11 and FIG. 16.

As shown in FIG. 11 and FIG. 16, the third inspection result registration process is different from the second inspection result registration process in that processes in step S51 to step S54 are executed instead of the process in step S37 and in that processes in step S55 to step S58 are executed instead of the processes in step S20 and step S38. The other processes are common to the second inspection result registration process and the third inspection result registration process. Hereinafter, among the processes included in the third inspection result registration process, only processes different from those of the second inspection result registration process will be described.

### <Step S51>

In step S51, the control unit 11 specifies the position of the imaging unit 15 at every third interval from the specification timing at which the second capture image including the first vehicle 51 and the second vehicle 52 aligned side by side is captured. The specification timing is the timing of capturing the first capture image acquired through the process in step S33 executed last. The process in step S51 is executed by the second specification processing unit 36C of the control unit 11.

### <Step S52>

In step S52, the control unit 11 specifies the imaging direction of the imaging unit 15 at the specification timing. The process in step S52 is executed by the third specification processing unit 37C of the control unit 11.

### <Step S53>

In step S53, the control unit 11 specifies the position of each of the first vehicle 51 and the second vehicle 52 on the basis of the second capture image, the position of the imaging unit 15 specified at the specification timing through the process in step S51, and the imaging direction specified through the process in step S52. In addition, the control unit 11 specifies the position of each of the plurality of the tires corresponding to the first vehicle 51 and the position of each of the plurality of the tires corresponding to the second vehicle 52. The process in step S53 is executed by the fourth specification processing unit 38C of the control unit 11.

### <Step S54>

In step S54, the control unit 11 generates the tire information placement screen SC30 (see FIG. 17) on the basis of the result of the process in step S36 and displays the generated tire information placement screen SC30 on the operation display unit 12. The process in step S54 is executed by the display processing unit 32C of the control unit 11.

### <Step S55>

In step S55, the control unit 11 determines whether or not the tire exists within the specific range from the most recent position of the imaging unit 15 specified through the process in step S51.

Here, if the control unit 11 determines that the tire exists within the specific range (Yes side of S55), the control unit 11 shifts the process to step S56. If the tire does not exist within the specific range (No side of S55), the control unit 11 shifts the process to step S57.

### <Step S56>

In step S56, the control unit 11 displays, in a blinking manner, the tire icon IM34 corresponding to the tire that exists within the specific range from the position of the imaging unit 15. The process in step S56 is executed by the display processing unit 32C of the control unit 11.

### <Step S57>

In step S57, the control unit 11 determines whether or not the position of the imaging unit 15 specified through the process in step S51 after the specification timing has moved beyond the position of the license plate of the first vehicle 51 or the position of the license plate of the second vehicle 52.

Here, if the control unit 11 determines that the position of the imaging unit 15 has moved beyond the position of either license plate (Yes side of S57), the control unit 11 shifts the process to step S58. If the position of the imaging unit 15 has not moved beyond the position of any license plate (No side of S57), the control unit 11 shifts the process to step S22.

### <Step S58>

In step S58, the control unit 11 switches the screen to be displayed. The process in step S58 is executed by the display processing unit 32C of the control unit 11.

Specifically, when the position of the imaging unit 15 moves beyond the position of the license plate of the first vehicle 51 to the first vehicle 51 side (right side of the first vehicle 51) in the alignment direction, the control unit 11 displays the first direction side screen SC40 instead of the tire information placement screen SC30. Also, when the position of the imaging unit 15 moves beyond the position of the license plate of the first vehicle 51 to the second vehicle 52 side (left side of the first vehicle 51) in the alignment direction, the control unit 11 displays the tire information placement screen SC30 instead of the first direction side screen SC40. Also, when the position of the imaging unit 15 moves beyond the position of the license plate of the second vehicle 52 to the second vehicle 52 side (left side of the second vehicle 52) in the alignment direction, the control unit 11 displays the second direction side screen SC50 instead of the tire information placement screen SC30. Also, when the position of the imaging unit 15 moves beyond the position of the license plate of the second vehicle 52 to the first vehicle 51 side (right side of the second vehicle 52) in the alignment direction, the control unit 11 displays the tire information placement screen SC30 instead of the second direction side screen SC50.

As described above, in the tire management system 100C, the screen to be displayed is switched between the tire information placement screen SC30, the first direction side screen SC40, and the second direction side screen SC50 in response to the movement of the worker carrying the mobile terminal 2C. Accordingly, it is possible to reduce the time and effort for operation by the user as compared to a configuration in which the screen to be displayed is switched in response to an operation input by the user.

The embodiments of the present disclosure described above include disclosure items (1) to (12) described below.

A disclosure item (1) is a tire management system including: a first specification processing unit configured to specify a first vehicle and a second vehicle; and a display processing unit configured to display a tire information placement screen in which a part or all of a plurality of pieces of tire information corresponding to a plurality of tires mounted on the first vehicle are placed on a side in a predetermined first direction and a part or all of a plurality of pieces of the tire information corresponding to a plurality of the tires mounted on the second vehicle are placed on a side in a second direction opposite to the first direction.

With this system, it is possible to collectively display a plurality of pieces of the tire information corresponding to a plurality of vehicles parked so as to be aligned with each other, for each vehicle. Therefore, when, between the two vehicles parked so as to be aligned with each other, the tire of one vehicle and the tire of the other vehicle are alternately inspected, it is possible to omit the time and effort for performing an operation for displaying the tire information of the other vehicle by a worker who performs the inspection work, each time the inspection work on the tire of the one vehicle is completed.

A disclosure item (2) is the tire management system according to the disclosure item (1), wherein, in the tire information placement screen, a part or all of the plurality of pieces of the tire information corresponding to the first vehicle are placed in a positional relationship corresponding to a plurality of tire mounting positions in the first vehicle, and a part or all of the plurality of pieces of the tire information corresponding to the second vehicle are placed in a positional relationship corresponding to a plurality of the tire mounting positions in the second vehicle.

With this system, it is possible to place the plurality of pieces of the tire information corresponding to the vehicle, in a positional relationship corresponding to the plurality of the tire mounting positions in the vehicle. Therefore, the worker can easily determine which of the plurality of pieces of the displayed tire information the tire information corresponding to the tire to be inspected is.

A disclosure item (3) is the tire management system according to the disclosure item (2), wherein, in the tire information placement screen, a part or all of the plurality of pieces of the tire information corresponding to the first vehicle are placed such that a side in a third direction orthogonal to the first direction is a front side of the first vehicle, and a part or all of the plurality of pieces of the tire information corresponding to the second vehicle are placed such that the side in the third direction is a front side of the second vehicle.

With this system, it is possible to place the plurality of pieces of the tire information corresponding to the first vehicle and the plurality of pieces of the tire information corresponding to the second vehicle, so as to correspond to a positional relationship of the tires in a plurality of the vehicles parked side by side. Usually, a plurality of the vehicles for which the tire inspection work is to be performed are parked side by side. That is, with this system, it is possible to place the plurality of pieces of the tire information so as to correspond to the actual positional relationship of the tires at the time of inspection work on the tire. Therefore, the worker can more easily determine which of the plurality of pieces of the displayed tire information the tire information corresponding to the tire to be inspected is.

A disclosure item (4) is the tire management system according to the disclosure item (1), further including a recognition processing unit configured to recognize vehicle identification information of a vehicle included in a capture image captured by an imaging unit, wherein the first specification processing unit specifies the first vehicle and the second vehicle on the basis of the vehicle identification information recognized by the recognition processing unit.

With this system, it is possible to specify the first vehicle and the second vehicle with less time and effort for operation as compared to a configuration in which the first vehicle and the second vehicle are specified on the basis of character information indicating the vehicle identification information and inputted by a user.

A disclosure item (5) is the tire management system according to the disclosure item (4), wherein the first direction is a left direction in the tire information placement screen, and when two pieces of the vehicle identification information corresponding to two said vehicles aligned side by side in the capture image are recognized by the recognition processing unit, the first specification processing unit specifies the vehicle on a left side in the capture image as the first vehicle and specifies the vehicle on a right side in the capture image as the second vehicle.

With this system, it is possible to place the plurality of pieces of the tire information corresponding to the first vehicle and the plurality of pieces of the tire information corresponding to the second vehicle, so as to be close to the actual positional relationship of the tires at the time at which the capture image is captured. Therefore, the worker can easily determine which of the plurality of pieces of the displayed tire information the tire information corresponding to the tire to be inspected is.

A disclosure item (6) is the tire management system according to the disclosure item (5), wherein, in the tire information placement screen, a part or all of the plurality of pieces of the tire information corresponding to the first vehicle are placed in a positional relationship corresponding to a plurality of tire mounting positions in the first vehicle such that a side in a down direction in the tire information placement screen is a front side of the first vehicle, and a part or all of the plurality of pieces of the tire information corresponding to the second vehicle are placed in a positional relationship corresponding to a plurality of the tire mounting positions in the second vehicle such that the side in the down direction in the tire information placement screen is a front side of the second vehicle.

With this system, it is possible to place the plurality of pieces of the tire information corresponding to the first vehicle and the plurality of pieces of the tire information corresponding to the second vehicle, so as to correspond to the actual positional relationship of the tires at the time at which the capture image is captured. Therefore, the worker can more easily determine which of the plurality of pieces of the displayed tire information the tire information corresponding to the tire to be inspected is.

A disclosure item (7) is the tire management system according to any one of the disclosure items (1) to (6), wherein: in the tire information placement screen, a part of the plurality of pieces of the tire information corresponding to the first vehicle is placed on the side in the first direction, and a part of the plurality of pieces of the tire information corresponding to the second vehicle is placed on the side in the second direction; and the display processing unit displays a first direction side screen in which a part or all of the plurality of pieces of the tire information corresponding to the first vehicle are placed, instead of the tire information placement screen, in response to a first switching operation corresponding to the first direction, and displays a second direction side screen in which a part or all of the plurality of pieces of the tire information corresponding to the second vehicle are placed, instead of the tire information placement screen, in response to a second switching operation corresponding to the second direction.

With this system, it is possible to increase the display size of each piece of the tire information as compared to a configuration in which the tire information placement screen in which all of the plurality of pieces of the tire information corresponding to the first vehicle and all of the plurality of pieces of the tire information corresponding to the second vehicle are placed is displayed. Therefore, it is possible to increase the visibility of each piece of the tire information.

A disclosure item (8) is the tire management system according to the disclosure item (6), further including: a second specification processing unit configured to specify a position of the imaging unit at every predetermined specification interval from a specification timing at which a specification capture image including the first vehicle and the second vehicle aligned side by side is captured; a third specification processing unit configured to specify an imaging direction of the imaging unit at the specification timing; and a fourth specification processing unit configured to specify a position of each of the first vehicle and the second vehicle on the basis of the specification capture image, the position of the imaging unit specified at the specification timing by the second specification processing unit, and the imaging direction specified by the third specification processing unit, wherein, in the tire information placement screen, a part of the plurality of pieces of the tire information corresponding to the first vehicle is placed on the side in the first direction, and a part of the plurality of pieces of the tire information corresponding to the second vehicle is placed on the side in the second direction, and the display processing unit switches a screen to be displayed, between the tire information placement screen, a first direction side screen in which a part or all of the plurality of pieces of the tire information corresponding to the first vehicle are placed, and a second direction side screen in which a part or all of the plurality of pieces of the tire information corresponding to the second vehicle are placed, in response to movement of the position of the imaging unit specified by the second specification processing unit after the specification timing.

With this system, it is possible to reduce the time and effort for operation by the user as compared to a configuration in which the screen to be displayed is switched in response to an operation input by the user.

A disclosure item (9) is the tire management system according to the disclosure item (8), wherein the fourth specification processing unit specifies a position of each of the plurality of the tires corresponding to the first vehicle and a position of each of the plurality of the tires corresponding to the second vehicle, and the display processing unit identifiably displays the tire information of the tire that exists within a predetermined specific range from the position of the imaging unit specified by the second specification processing unit after the specification timing.

With this system, it is possible to identifiably display the piece of the tire information corresponding to the tire close to the worker. Therefore, the worker can more easily determine which of the plurality of pieces of the displayed tire information the tire information corresponding to the tire to be inspected is.

A disclosure item (10) is the tire management system according to any one of the disclosure items (1) to (9), wherein the display processing unit displays each piece of the tire information in a selectable manner and accepts a selection operation for selecting any piece of the tire information, and the tire management system further includes an acquisition processing unit configured to acquire inspection result data including an inspection result of the tire, and an association processing unit configured to associate the inspection result data acquired by the acquisition processing unit with tire identification information of the tire corresponding to the piece of the tire information selected by the selection operation.

With this system, it is possible to reduce the time and effort for operation by the user as compared to a configuration in which an operation for inputting character information indicating the tire identification information associated with the inspection result data is accepted.

A disclosure item (11) is the tire management system according to any one of the disclosure items (1) to (10), further including: an information processing device including a database in which tire data regarding the tire is registered; and a terminal device including a display unit, wherein the display processing unit displays the tire information placement screen based on the tire data registered in the database, on the display unit.

With this system, it is possible to separate the database from the terminal device on which the tire information placement screen is displayed. Therefore, it is possible to reduce the configuration of the storage unit of the terminal device to a smaller scale.

A disclosure item (12) is a tire management method including: a specification step of specifying a first vehicle and a second vehicle; and a display step of displaying a tire information placement screen in which a part or all of a plurality of pieces of tire information corresponding to a plurality of tires mounted on the first vehicle are placed on a side in a predetermined first direction and a part or all of a plurality of pieces of the tire information corresponding to a plurality of the tires mounted on the second vehicle are placed on a side in a second direction opposite to the first direction.

With this method, it is possible to omit the time and effort for operation by the worker, as in the disclosure item (1).

## Claims

1. A tire management system (100A, 100B, 100C) comprising:
a first specification processing unit (31A, 31B) configured to specify a first vehicle (51, 52) and a second vehicle (51, 52); and **characterised by**
a display processing unit (32A, 32B, 32C) configured to display a tire information placement screen (SC30) in which a part or all of a plurality of pieces of tire information corresponding to a plurality of tires mounted on the first vehicle (51, 52) are placed on a side in a predetermined first direction and a part or all of a plurality of pieces of the tire information corresponding to a plurality of the tires mounted on the second vehicle (51, 52) are placed on a side in a second direction opposite to the first direction.

2. The tire management system (100A, 100B, 100C) according to claim 1, wherein, in the tire information placement screen (SC30), a part or all of the plurality of pieces of the tire information corresponding to the first vehicle (51, 52) are placed in a positional relationship corresponding to a plurality of tire mounting positions in the first vehicle (51, 52), and a part or all of the plurality of pieces of the tire information corresponding to the second vehicle (51, 52) are placed in a positional relationship corresponding to a plurality of the tire mounting positions in the second vehicle (51, 52).

3. The tire management system (100A, 100B, 100C) according to claim 2, wherein, in the tire information placement screen (SC30), a part or all of the plurality of pieces of the tire information corresponding to the first vehicle (51, 52) are placed such that a side in a third direction orthogonal to the first direction is a front side of the first vehicle (51, 52), and a part or all of the plurality of pieces of the tire information corresponding to the second vehicle (51, 52) are placed such that the side in the third direction is a front side of the second vehicle (51, 52).

4. The tire management system (100B, 100C) according to claim 1, further comprising a recognition processing unit (35B) configured to recognize vehicle identification information of a vehicle (51, 52) included in a capture image captured by an imaging unit (15), wherein
the first specification processing unit (31B) specifies the first vehicle (51, 52) and the second vehicle (51, 52) on the basis of the vehicle identification information recognized by the recognition processing unit (35B).

5. The tire management system (100B, 100C) according to claim 4, wherein
the first direction is a left direction in the tire information placement screen (SC30), and
when two pieces of the vehicle identification information corresponding to two said vehicles (51, 52) aligned side by side in the capture image are recognized by the recognition processing unit (35B), the first specification processing unit (31B) specifies the vehicle (51) on a left side in the capture image as the first vehicle (51) and specifies the vehicle (52) on a right side in the capture image as the second vehicle (52).

6. The tire management system (100B, 100C) according to claim 5, wherein, in the tire information placement screen (SC30), a part or all of the plurality of pieces of the tire information corresponding to the first vehicle (51) are placed in a positional relationship corresponding to a plurality of tire mounting positions in the first vehicle (51) such that a side in a down direction in the tire information placement screen (SC30) is a front side of the first vehicle (51), and a part or all of the plurality of pieces of the tire information corresponding to the second vehicle (52) are placed in a positional relationship corresponding to a plurality of the tire mounting positions in the second vehicle (52) such that the side in the down direction in the tire information placement screen (SC30) is a front side of the second vehicle (52).

7. The tire management system (100A, 100B, 100C) according to any one of claims 1 to 6, wherein
in the tire information placement screen (SC30), a part of the plurality of pieces of the tire information corresponding to the first vehicle (51, 52) is placed on the side in the first direction, and a part of the plurality of pieces of the tire information corresponding to the second vehicle (51, 52) is placed on the side in the second direction, and
the display processing unit (32A, 32B, 32C) displays a first direction side screen (SC40) in which a part or all of the plurality of pieces of the tire information corresponding to the first vehicle (51, 52) are placed, instead of the tire information placement screen (SC30), in response to a first switching operation corresponding to the first direction, and displays a second direction side screen (SC50) in which a part or all of the plurality of pieces of the tire information corresponding to the second vehicle (51, 52) are placed, instead of the tire information placement screen (SC30), in response to a second switching operation corresponding to the second direction.

8. The tire management system (100C) according to claim 6, further comprising:
a second specification processing unit (36C) configured to specify a position of the imaging unit (15) at every predetermined specification interval from a specification timing at which a specification capture image including the first vehicle (51, 52) and the second vehicle (51, 52) aligned side by side is captured;
a third specification processing unit (37C) configured to specify an imaging direction of the imaging unit (15) at the specification timing; and
a fourth specification processing unit (38C) configured to specify a position of each of the first vehicle (51, 52) and the second vehicle (51, 52) on the basis of the specification capture image, the position of the imaging unit (15) specified at the specification timing by the second specification processing unit (36C), and the imaging direction specified by the third specification processing unit (37C), wherein
in the tire information placement screen (SC30), a part of the plurality of pieces of the tire information corresponding to the first vehicle (51, 52) is placed on the side in the first direction, and a part of the plurality of pieces of the tire information corresponding to the second vehicle (51, 52) is placed on the side in the second direction, and
the display processing unit (32A, 32B, 32C) switches a screen to be displayed, between the tire information placement screen (SC30), a first direction side screen (SC40) in which a part or all of the plurality of pieces of the tire information corresponding to the first vehicle (51, 52) are placed, and a second direction side screen (SC50) in which a part or all of the plurality of pieces of the tire information corresponding to the second vehicle (51, 52) are placed, in response to movement of the position of the imaging unit (15) specified by the second specification processing unit (36C) after the specification timing.

9. The tire management system (100C) according to claim 8, wherein
the fourth specification processing unit (38C) specifies a position of each of the plurality of the tires corresponding to the first vehicle (51, 52) and a position of each of the plurality of the tires corresponding to the second vehicle (51, 52), and
the display processing unit (32A, 32B, 32C) identifiably displays the tire information of the tire that exists within a predetermined specific range from the position of the imaging unit (15) specified by the second specification processing unit (36C) after the specification timing.

10. The tire management system (100A, 100B, 100C) according to any one of claims 1 to 9, wherein
the display processing unit (32A, 32B, 32C) displays each piece of the tire information in a selectable manner and accepts a selection operation for selecting any piece of the tire information, and
the tire management system (100A, 100B, 100C) further comprises
an acquisition processing unit (33) configured to acquire inspection result data including an inspection result of the tire, and
an association processing unit (34) configured to associate the inspection result data acquired by the acquisition processing unit (33) with tire identification information of the tire corresponding to the piece of the tire information selected by the selection operation.

11. The tire management system (100A, 100B, 100C) according to any one of claims 1 to 10, further comprising:
an information processing device (1) including a database (4) in which tire data regarding the tire is registered; and
a terminal device (2A, 2B, 2C) including a display unit (12), wherein
the display processing unit (32A, 32B, 32C) displays the tire information placement screen (SC30) based on the tire data registered in the database (4), on the display unit (12).

12. A tire management method comprising:
a specification step of specifying a first vehicle (51, 52) and a second vehicle (51, 52); and **characterised by**
a display step of displaying a tire information placement screen (SC30) in which a part or all of a plurality of pieces of tire information corresponding to a plurality of tires mounted on the first vehicle (51, 52) are placed on a side in a predetermined first direction and a part or all of a plurality of pieces of the tire information corresponding to a plurality of the tires mounted on the second vehicle (51, 52) are placed on a side in a second direction opposite to the first direction.

## Patentansprüche

1. Reifenmanagementsystem (100A, 100B, 100C), umfassend:
eine erste Spezifikationsverarbeitungseinheit (31A, 31B), die konfiguriert ist, um ein erstes Fahrzeug (51, 52) und ein zweites Fahrzeug (51, 52) zu spezifizieren; und **gekennzeichnet durch**
eine Anzeigeverarbeitungseinheit (32A, 32B, 32C), die konfiguriert ist, um einen Reifeninformationsplatzierungsbildschirm (SC30) anzuzeigen, in dem ein Teil oder alle einer Vielzahl von Reifeninformationen, die einer Vielzahl von an dem ersten Fahrzeug (51, 52) montierten Reifen entsprechen, auf einer Seite in einer vorbestimmten ersten Richtung platziert sind und ein Teil oder alle einer Vielzahl der Reifeninformationen, die einer Vielzahl der an dem zweiten Fahrzeug (51, 52) montierten Reifen entsprechen, auf einer Seite in einer zu der ersten Richtung entgegengesetzten zweiten Richtung platziert sind.

2. Reifenmanagementsystem (100A, 100B, 100C) nach Anspruch 1, wobei in dem Reifeninformationsplatzierungsbildschirm (SC30) ein Teil oder alle der Vielzahl der Reifeninformationen, die dem ersten Fahrzeug (51, 52) entsprechen, in einer Positionsbeziehung platziert sind, die einer Vielzahl von Reifenmontagepositionen in dem ersten Fahrzeug (51, 52) entspricht, und ein Teil oder alle der Vielzahl der Reifeninformationen, die dem zweiten Fahrzeug (51, 52) entsprechen, in einer Positionsbeziehung platziert sind, die einer Vielzahl der Reifenmontagepositionen in dem zweiten Fahrzeug (51, 52) entspricht.

3. Reifenmanagementsystem (100A, 100B, 100C) nach Anspruch 2, wobei in dem Reifeninformationsplatzierungsbildschirm (SC30) ein Teil oder alle der Vielzahl von Reifeninformationen, die dem ersten Fahrzeug (51, 52) entsprechen, so platziert sind, dass eine Seite in einer dritten Richtung orthogonal zu der ersten Richtung eine Vorderseite des ersten Fahrzeugs (51, 52) ist, und ein Teil oder alle der Vielzahl von Reifeninformationen, die dem zweiten Fahrzeug (51, 52) entsprechen, so platziert sind, dass die Seite in der dritten Richtung eine Vorderseite des zweiten Fahrzeugs (51, 52) ist.

4. Reifenmanagementsystem (100B, 100C) nach Anspruch 1, ferner umfassend eine Erkennungsverarbeitungseinheit (35B), die konfiguriert ist, um Fahrzeugidentifikationsinformationen eines Fahrzeugs (51, 52) zu erkennen, die in einem durch eine Bildgebungseinheit (15) aufgenommenen Aufnahmebild eingeschlossen sind, wobei
die erste Spezifikationsverarbeitungseinheit (31B) das erste Fahrzeug (51, 52) und das zweite Fahrzeug (51, 52) auf Basis der durch die Erkennungsverarbeitungseinheit (35B) erkannten Fahrzeugidentifikationsinformation spezifiziert.

5. Reifenmanagementsystem (100B, 100C) nach Anspruch 4, wobei
die erste Richtung eine linke Richtung in dem Reifeninformationsplatzierungsbildschirm (SC30) ist, und
wenn zwei Fahrzeugidentifikationsinformationen, die den zwei in dem Aufnahmebild nebeneinander ausgerichteten Fahrzeugen (51, 52) entsprechen, durch die Erkennungsverarbeitungseinheit (35B) erkannt werden, die erste Spezifikationsverarbeitungseinheit (31B) das Fahrzeug (51) auf einer linken Seite in dem Aufnahmebild als das erste Fahrzeug (51) spezifiziert und das Fahrzeug (52) auf einer rechten Seite in dem Aufnahmebild als das zweite Fahrzeug (52) spezifiziert.

6. Reifenmanagementsystem (100B, 100C) nach Anspruch 5, wobei in dem Reifeninformationsplatzierungsbildschirm (SC30) ein Teil oder alle der Vielzahl von Reifeninformationen, die dem ersten Fahrzeug (51) entsprechen, in einer Positionsbeziehung platziert sind, die einer Vielzahl der Reifenmontagepositionen in dem ersten Fahrzeug (51) entspricht, sodass eine Seite in einer Abwärtsrichtung in dem Reifeninformationsplatzierungsbildschirm (SC30) eine Vorderseite des ersten Fahrzeugs (51) ist, und ein Teil oder alle der Vielzahl der Reifeninformationen, die dem zweiten Fahrzeug (52) entsprechen, in einer Positionsbeziehung platziert sind, die einer Vielzahl der Reifenmontagepositionen in dem zweiten Fahrzeug (52) entspricht, sodass die Seite in der Abwärtsrichtung in dem Reifeninformationsplatzierungsbildschirm (SC30) eine Vorderseite des zweiten Fahrzeugs ist (52).

7. Reifenmanagementsystem (100A, 100B, 100C) nach einem der Ansprüche 1 bis 6, wobei
in dem Reifeninformationsplatzierungsbildschirm (SC30) ein Teil der Vielzahl der Reifeninformationen, die dem ersten Fahrzeug (51, 52) entsprechen, auf der Seite in der ersten Richtung platziert ist, und ein Teil der Vielzahl der Reifeninformationen, die dem zweiten Fahrzeug (51, 52) entsprechen, auf der Seite in der zweiten Richtung platziert ist, und
die Anzeigeverarbeitungseinheit (32A, 32B, 32C) als Reaktion auf einen ersten Schaltvorgang, der der ersten Richtung entspricht, anstelle des Reifeninformationsplatzierungsbildschirms (SC30) einen Erste-Richtungsseite-Bildschirm (SC40) anzeigt, in dem ein Teil oder alle der Vielzahl der Reifeninformationen, die dem ersten Fahrzeug (51, 52) entsprechen, platziert sind, und als Reaktion auf einen zweiten Schaltvorgang, der der zweiten Richtung entspricht, anstelle des Reifeninformationsplatzierungsbildschirms (SC30) einen Zweite-Richtungsseite-Bildschirm (SC50) anzeigt, in dem ein Teil oder alle der Vielzahl der Reifeninformationen, die dem zweiten Fahrzeug (51, 52) entsprechen, platziert sind.

8. Reifenmanagementsystem (100C) nach Anspruch 6, ferner umfassend:
eine zweite Spezifikationsverarbeitungseinheit (36C), die konfiguriert ist, um eine Position der Bildgebungseinheit (15) in jedem vorbestimmten Spezifikationsintervall ab einem Spezifikationszeitpunkt zu spezifizieren, zu dem ein Spezifikationsaufnahmebild aufgenommen wird, das das erste Fahrzeug (51, 52) und das zweite Fahrzeug (51, 52) nebeneinander ausgerichtet einschließt;
eine dritte Spezifikationsverarbeitungseinheit (37C), die konfiguriert ist, um eine Abbildungsrichtung der Abbildungseinheit (15) zu dem Spezifikationszeitpunkt zu spezifizieren; und
eine vierte Spezifikationsverarbeitungseinheit (38C), die konfiguriert ist, um eine Position von jedem von dem ersten Fahrzeug (51, 52) und dem zweiten Fahrzeug (51, 52) auf Basis des Spezifikationsaufnahmebildes, der Position der Bildgebungseinheit (15), die zu dem Spezifikationszeitpunkt durch die zweite Spezifikationsverarbeitungseinheit (36C) spezifiziert wird, und der Bildgebungsrichtung, die durch die dritte Spezifikationsverarbeitungseinheit (37C) spezifiziert wird, zu spezifizieren, wobei
in dem Reifeninformationsplatzierungsbildschirm (SC30) ein Teil der Vielzahl der Reifeninformationen, die dem ersten Fahrzeug (51, 52) entsprechen, auf der Seite in der ersten Richtung platziert ist, und ein Teil der Vielzahl der Reifeninformationen, die dem zweiten Fahrzeug (51, 52) entsprechen, auf der Seite in der zweiten Richtung platziert ist, und
die Anzeigeverarbeitungseinheit (32A, 32B, 32C) einen anzuzeigenden Bildschirm zwischen dem Reifeninformationsplatzierungsbildschirm (SC30), einem Erste-Richtungsseite-Bildschirm (SC40), in dem ein Teil oder alle der Vielzahl der Reifeninformationen, die dem ersten Fahrzeug (51, 52) entsprechen, platziert sind, und einem Zweite-Richtungsseite-Bildschirm (SC50), in dem ein Teil oder alle der Vielzahl der Reifeninformationen, die dem zweiten Fahrzeug (51, 52) entsprechen, platziert sind, als Reaktion auf eine Bewegung der Position der Bildgebungseinheit (15), die durch die zweite Spezifikationsverarbeitungseinheit (36C) nach dem Spezifikationszeitpunkt spezifiziert wird, umschaltet.

9. Reifenmanagementsystem (100C) nach Anspruch 8, wobei
die vierte Spezifikationsverarbeitungseinheit (38C) eine Position jedes der Vielzahl der Reifen, die dem ersten Fahrzeug (51, 52) entsprechen, und eine Position jedes der Vielzahl der Reifen, die dem zweiten Fahrzeug (51, 52) entsprechen, spezifiziert, und
die Anzeigeverarbeitungseinheit (32A, 32B, 32C) die Reifeninformationen des Reifens identifizierbar anzeigt, der innerhalb einer vorbestimmten spezifischen Reichweite von der Position der durch die zweite Spezifikationsverarbeitungseinheit (36C) nach dem Spezifikationszeitpunkt spezifizierten Bildgebungseinheit (15) vorhanden ist.

10. Reifenmanagementsystem (100A, 100B, 100C) nach einem der Ansprüche 1 bis 9, wobei
die Anzeigeverarbeitungseinheit (32A, 32B, 32C) jede Reifeninformation auf auswählbare Weise anzeigt und einen Auswahlvorgang zum Auswählen einer beliebigen Reifeninformation annimmt, und
das Reifenmanagementsystem (100A, 100B, 100C) ferner umfasst:
eine Erfassungsverarbeitungseinheit (33), die konfiguriert ist, um Prüfergebnisdaten zu erfassen, die ein Prüfergebnis des Reifens einschließen, und
eine Zuordnungsverarbeitungseinheit (34), die konfiguriert ist, um die durch die Erfassungsverarbeitungseinheit (33) erfassten Prüfergebnisdaten den Reifenidentifikationsinformationen des Reifens, der dem durch den Auswahlvorgang ausgewählten Teil der Reifeninformationen entspricht, zuzuordnen.

11. Reifenmanagementsystem (100A, 100B, 100C) nach einem der Ansprüche 1 bis 10, ferner umfassend:
eine Informationsverarbeitungsvorrichtung (1), die eine Datenbank (4) einschließt, in der Reifendaten bezüglich des Reifens registriert sind; und
eine Endvorrichtung (2A, 2B, 2C), die eine Anzeigeeinheit (12) einschließt, wobei
die Anzeigeverarbeitungseinheit (32A, 32B, 32C) den Reifeninformationsplatzierungsbildschirm (SC30) basierend auf den in der Datenbank (4) registrierten Reifendaten auf der Anzeigeeinheit (12) anzeigt.

12. Reifenmanagementverfahren, umfassend:
einen Spezifikationsschritt des Spezifizierens eines ersten Fahrzeugs (51, 52) und eines zweiten Fahrzeugs (51, 52) und **gekennzeichnet durch**
einen Anzeigeschritt des Anzeigens eines Reifeninformationsplatzierungsbildschirms (SC30), in dem ein Teil oder alle einer Vielzahl von Reifeninformationen, die einer Vielzahl von an dem ersten Fahrzeug (51, 52) montierten Reifen entsprechen, auf einer Seite in einer vorbestimmten ersten Richtung platziert sind und ein Teil oder alle einer Vielzahl der Reifeninformationen, die einer Vielzahl der an dem zweiten Fahrzeug (51, 52) montierten Reifen entsprechen, auf einer Seite in einer zu der ersten Richtung entgegengesetzten zweiten Richtung platziert sind.

## Revendications

1. Système de gestion de pneu (100A, 100B, 100C) comprenant :
une première unité de traitement de spécification (31 A, 31 B) configurée pour spécifier un premier véhicule (51, 52) et un second véhicule (51, 52) ; et **caractérisé par** :
une unité de traitement d'affichage (32A, 32B, 32C) configurée pour afficher un écran d'agencement d'informations de pneu (SC30) dans lequel une partie ou la totalité d'une pluralité d'éléments d'informations de pneu correspondant à une pluralité de pneus montés sur le premier véhicule (51, 52) sont placés sur un côté dans une première direction prédéterminée et une partie ou la totalité d'une pluralité d'éléments des informations de pneu correspondant à une pluralité des pneus montés sur le second véhicule (51, 52) sont placés sur un côté dans une deuxième direction opposée à la première direction.

2. Système de gestion de pneu (100A, 100B, 100C) selon la revendication 1, dans lequel, dans l'écran d'agencement d'informations de pneu (SC30), une partie ou la totalité de la pluralité d'éléments des informations de pneu correspondant au premier véhicule (51, 52) sont placés dans une relation de position correspondant à une pluralité de positions de montage de pneu dans le premier véhicule (51, 52), et une partie ou la totalité de la pluralité d'éléments des informations de pneu correspondant au second véhicule (51, 52) sont placés dans une relation de position correspondant à une pluralité des positions de montage de pneu dans le second véhicule (51, 52).

3. Système de gestion de pneu (100A, 100B, 100C) selon la revendication 2, dans lequel, dans l'écran d'agencement d'informations de pneu (SC30), une partie ou la totalité de la pluralité d'éléments des informations de pneu correspondant au premier véhicule (51, 52) sont placés de telle sorte qu'un côté dans une troisième direction orthogonale à la première direction est un côté avant du premier véhicule (51, 52), et une partie ou la totalité de la pluralité d'éléments des informations de pneu correspondant au second véhicule (51, 52) sont placés de telle sorte que le côté dans la troisième direction est un côté avant du second véhicule (51, 52).

4. Système de gestion de pneu (100B, 100C) selon la revendication 1, comprenant en outre une unité de traitement de reconnaissance (35B) configurée pour reconnaître des informations d'identification de véhicule d'un véhicule (51, 52) incluses dans une image de capture capturée par une unité d'imagerie (15), dans lequel
la première unité de traitement de spécification (31 B) spécifie le premier véhicule (51, 52) et le second véhicule (51, 52) en fonction des informations d'identification de véhicule reconnues par l'unité de traitement de reconnaissance (35B).

5. Système de gestion de pneumatique (100B, 100C) selon la revendication 4, dans lequel
la première direction est une direction gauche dans l'écran d'agencement d'informations de pneumatique (SC30), et
lorsque deux éléments des informations d'identification de véhicule correspondant auxdits deux véhicules (51, 52) alignés côte à côte dans l'image de capture sont reconnus par l'unité de traitement de reconnaissance (35B), la première unité de traitement de spécification (31 B) spécifie le véhicule (51) sur un côté gauche dans l'image de capture comme étant le premier véhicule (51) et spécifie le véhicule (52) sur un côté droit dans l'image de capture comme étant le second véhicule (52).

6. Système de gestion de pneu (100B, 100C) selon la revendication 5, dans lequel, dans l'écran d'agencement d'informations de pneu (SC30), une partie ou la totalité de la pluralité d'éléments des informations de pneu correspondant au premier véhicule (51) sont placés dans une relation de position correspondant à une pluralité de positions de montage de pneu dans le premier véhicule (51) de telle sorte qu'un côté dans une direction vers le bas dans l'écran d'agencement d'informations de pneu (SC30) est un côté avant du premier véhicule (51), et une partie ou la totalité de la pluralité d'éléments des informations de pneu correspondant au second véhicule (52) sont placés dans une relation de position correspondant à une pluralité des positions de montage de pneu dans le second véhicule (52) de telle sorte que le côté dans la direction vers le bas dans l'écran d'agencement d'informations de pneu (SC30) est un côté avant du second véhicule(52).

7. Système de gestion de pneu (100A, 100B, 100C) selon l'une quelconque des revendications 1 à 6, dans lequel
dans l'écran d'agencement d'informations de pneu (SC30), une partie de la pluralité d'éléments des informations de pneu correspondant au premier véhicule (51, 52) est placée sur le côté dans la première direction, et une partie de la pluralité d'éléments des informations de pneu correspondant au second véhicule (51, 52) est placée sur le côté dans la deuxième direction, et
l'unité de traitement d'affichage (32A, 32B, 32C) affiche un écran du côté de la première direction (SC40) dans lequel une partie ou la totalité de la pluralité d'éléments des informations de pneu correspondant au premier véhicule (51, 52) sont placés, au lieu de l'écran d'agencement d'informations de pneu (SC30), en réponse à une première opération de commutation correspondant à la première direction, et affiche un écran du côté de la deuxième direction (SC50) dans lequel une partie ou la totalité de la pluralité d'éléments des informations de pneu correspondant au second véhicule (51, 52) sont placés, au lieu de l'écran d'agencement d'informations de pneu (SC30), en réponse à une seconde opération de commutation correspondant à la deuxième direction.

8. Système de gestion de pneu (100C) selon la revendication 6, comprenant en outre :
une deuxième unité de traitement de spécification (36C) configurée pour spécifier une position de l'unité d'imagerie (15) à chaque intervalle de spécification prédéterminé à partir d'un instant de spécification auquel une image de capture de spécification comprenant le premier véhicule (51, 52) et le second véhicule (51, 52) alignés côte à côte est capturée ;
une troisième unité de traitement de spécification (37C) configurée pour spécifier une direction d'imagerie de l'unité d'imagerie (15) à l'instant de spécification ; et
une quatrième unité de traitement de spécification (38C) configurée pour spécifier une position de chacun du premier véhicule (51, 52) et du second véhicule (51, 52) en fonction de l'image de capture de spécification, de la position de l'unité d'imagerie (15) spécifiée à l'instant de spécification par la deuxième unité de traitement de spécification (36C), et de la direction d'imagerie spécifiée par la troisième unité de traitement de spécification (37C), dans laquelle
dans l'écran d'agencement d'informations de pneu (SC30), une partie de la pluralité d'éléments des informations de pneu correspondant au premier véhicule (51, 52) est placée sur le côté dans la première direction, et une partie de la pluralité d'éléments des informations de pneu correspondant au second véhicule (51, 52) est placée sur le côté dans la deuxième direction, et
l'unité de traitement d'affichage (32A, 32B, 32C) commute un écran à afficher, entre l'écran d'agencement d'informations de pneu (SC30), un écran de côté de première direction (SC40) dans lequel une partie ou la totalité de la pluralité d'éléments des informations de pneu correspondant au premier véhicule (51, 52) sont placés, et un écran de côté de deuxième direction (SC50) dans lequel une partie ou la totalité de la pluralité d'éléments des informations de pneu correspondant au second véhicule (51, 52) sont placés, en réponse au mouvement de la position de l'unité d'imagerie (15) spécifiée par la deuxième unité de traitement de spécification (36C) après l'instant de spécification.

9. Système de gestion de pneu (100C) selon la revendication 8, dans lequel
la quatrième unité de traitement de spécification (38C) spécifie une position de chacun de la pluralité des pneus correspondant au premier véhicule (51, 52) et une position de chacun de la pluralité des pneus correspondant au second véhicule (51, 52), et
l'unité de traitement d'affichage (32A, 32B, 32C) affiche de manière identifiable les informations de pneu du pneu qui se trouve dans une plage spécifique prédéterminée à partir de la position de l'unité d'imagerie (15) spécifiée par la deuxième unité de traitement de spécification (36C) après l'instant de spécification.

10. Système de gestion de pneu (100A, 100B, 100C) selon l'une quelconque des revendications 1 à 9, dans lequel
l'unité de traitement d'affichage (32A, 32B, 32C) affiche chaque élément des informations de pneu de manière sélectionnable et accepte une opération de sélection pour sélectionner un élément quelconque des informations de pneu, et
le système de gestion de pneu (100A, 100B, 100C) comprend en outre
une unité de traitement d'acquisition (33) configurée pour acquérir des données de résultat d'inspection comprenant un résultat d'inspection du pneu, et
une unité de traitement d'association (34) configurée pour associer les données de résultat d'inspection acquises par l'unité de traitement d'acquisition (33) à des informations d'identification de pneu du pneu correspondant à l'élément des informations de pneu sélectionné par l'opération de sélection.

11. Système de gestion de pneu (100A, 100B, 100C) selon l'une quelconque des revendications 1 à 10, comprenant en outre :
un dispositif de traitement d'informations (1) comprenant une base de données (4) dans laquelle des données de pneumatique concernant le pneumatique sont enregistrées ; et
un dispositif terminal (2A, 2B, 2C) comprenant une unité d'affichage (12), dans lequel
l'unité de traitement d'affichage (32A, 32B, 32C) affiche l'écran d'agencement d'informations de pneu (SC30) en fonction des données de pneu enregistrées dans la base de données (4), sur l'unité d'affichage (12).

12. Procédé de gestion de pneu comprenant :
une étape de spécification consistant à spécifier un premier véhicule (51, 52) et un second véhicule (51, 52) et **caractérisé par**
une étape d'affichage consistant à afficher un écran d'agencement d'informations de pneu (SC30) dans lequel une partie ou la totalité d'une pluralité d'éléments d'informations de pneu correspondant à une pluralité de pneus montés sur le premier véhicule (51, 52) sont placés sur un côté dans une première direction prédéterminée et une partie ou la totalité d'une pluralité d'éléments des informations de pneu correspondant à une pluralité des pneus montés sur le second véhicule (51, 52) sont placés sur un côté dans une deuxième direction opposée à la première direction.
